Europäisches Patentamt

European Patent Office

Office européen des brevets

(19)

(11) **EP 0 354 833 B1**

(12) **FASCICULE DE BREVET EUROPEEN**

(45) Date de publication et mention
de la délivrance du brevet:
**29.05.1996   Bulletin 1996/22**

(51) Int Cl.⁶: **G06T 15/40**

(21) Numéro de dépôt: **89402194.8**

(22) Date de dépôt: **02.08.1989**

(54) **Procédé d'élimination des faces cachées, pour la synthèse d'une image filaire tridimensionnelle**

Verfahren zur Beseitigung der bedeckten Flächen für die Synthese eines dreidimensionalen fadenförmigen Bildes

Method of eliminating hidden faces for the synthesis of a three-dimensional wire image

(84) Etats contractants désignés:
**DE GB**

(30) Priorité: **10.08.1988  FR 8810787**

(43) Date de publication de la demande:
**14.02.1990   Bulletin 1990/07**

(73) Titulaire: **THOMSON-CSF
75008 Paris (FR)**

(72) Inventeurs:
• **Labeaute, Philippe
F-92045 Paris la Défense (FR)**
• **Pierre, Eric
F-92045 Paris la Défense (FR)**

(74) Mandataire: **Courtellemont, Alain et al
THOMSON-CSF,
SCPI,
B.P. 329,
50, rue Jean-Pierre Timbaud
F-92402 Courbevoie Cédex (FR)**

(56) Documents cités:
EP-A- 0 167 880          WO-A-86/00454
FR-A- 2 406 927

## Description

L'invention concerne un procédé d'élimination des faces cachées pour la synthèse d'une image filaire tridimensionnelle. Une telle image est affichée sur un dispositif d'affichage à deux dimensions, par exemple un tube cathodique, et représente un objet ou un symbole ayant apparemment trois dimensions. L'image est constituée de facettes polygonales dont certaines sont masquées partiellement, ou entièrement, par des facettes plus proches de l'observateur, pour donner l'impression d'une troisième dimension. Chaque facette peut être tracée sur l'écran soit en éclairant sa surface, l'image est alors dite surfacique, soit en éclairant uniquement les arêtes de la facette, l'image est alors dite filaire ou en fil de fer.

Classiquement, une image filaire est affichée sur un tube cathodique au moyen d'un balayage dit cavalier, consistant à ne dévier le faisceau électronique que pour balayer les arêtes et les segments d'arêtes qui doivent être allumés, en recommençant tous les calculs pour chaque image affichée.

La synthèse d'images filaires est moins répandue que la synthèse d'images surfaciques, mais elle présente un avantage important lorsque le dispositif d'affichage est un tube à rayons cathodiques. En effet, le faisceau électronique de ce tube est alors dévié uniquement pour balayer les arêtes de l'image, ce qui permet d'obtenir une grande luminosité même si l'image a une très grande résolution. La synthèse d'images filaires réalisée le plus couramment est bidimensionnelle. La synthèse tridimensionnelle pose le problème de l'élimination des parties d'arêtes qui doivent être cachées pour restituer une apparence de troisième dimension.

Il est connu (cf EP-A-167880) d'éliminer les arêtes cachées dans une image filaire en segmentant les arêtes selon leurs intersections visibles avec d'autres arêtes représentant les contours de faces visibles et en associant à chaque arête une information sur sa visibilité; pour chaque segment, on vérifie lors de chaque changement sa visibilité par rapport à chaque face visible à représenter.

Le but de l'invention est de proposer un procédé d'élimination des faces cachées pour la synthèse d'une image filaire tridimensionnelle, dont la mise en oeuvre soit suffisamment rapide pour permettre une synthèse en temps réel. Le procédé selon l'invention permet de détecter très rapidement les points d'intersection des arêtes entre elles ; et de déterminer quels sont les segments d'arêtes qui sont effectivement visibles. Il peut être mis en oeuvre au moyen d'un microprocesseur à usage universel, disponible couramment sur le marché, sans nécessiter de matériel particulier tel qu'une mémoire d'image. Sa rapidité de mise en oeuvre découle notamment de la manière de déterminer les points d'intersection des arêtes, qui évite que la quantité de calcul augmente exponentiellement avec le nombre d'arêtes.

Selon l'invention, un procédé d'élimination des faces cachées pour la synthèse d'une image filaire tridimensionnelle, sur un afficheur à deux dimensions, l'image étant constituée de facettes, chaque facette étant constituée par des arêtes représentées chacune par les coordonnées de ses extrémités et par la valeur de sa pente, dans un repère cartésien constitué de deux axes de coordonnées, chaque point d'une arête étant muni d'un paramètre de priorité correspondant à une troisième dimension ;

est caractérisé en ce qu'il consiste à :

- déterminer les points d'intersection de toutes les arêtes entre elles, en :

  -- découpant l'ensemble des valeurs d'ordonnées en intervalles $[Y(i),Y(i+1)[$ tels que chaque borne est la valeur d'ordonnée d'une extrémité d'arête et tels qu'aucune ordonnée d'extrémité d'arête n'est comprise dans ces intervalles ;
  -- déterminant, pour chaque intervalle $[Y(i),Y(i+1)[$, les coordonnées des points d'intersection des arêtes dont les ordonnées sont comprises dans cet intervalle ;
  -- constituant, pour chaque arête, une liste des points d'intersection de cette arête avec les autres arêtes plus prioritaires, cette liste étant ordonnée selon la position des points d'intersection entre une première et une seconde extrémité de l'arête ;

- déterminer, pour chaque point d'intersection, la valeur d'un indicateur indiquant si la facette de l'arête prioritaire masque l'arête la moins prioritaire, à partir du point d'intersection considéré ; ou la masque avant le point d'intersection considéré ; ou bien la masque avant et après le point d'intersection ; chaque arête étant parcourue d'une première à une seconde extrémité ;
- déterminer, pour la première extrémité de chaque arête, le nombre de facettes qui masquent cette première extrémité ;
- déterminer, pour chaque arête, les segments de cette arête qui sont visibles et ceux qui sont cachés, en déterminant le nombre de facettes qui masquent chaque segment, à partir du nombre des facettes qui masquent la première extrémité de l'arête, et à partir des valeurs des indicateurs pour les points d'intersection de cette arête avec des arêtes plus prioritaires.

L'invention sera mieux comprise et d'autres détails apparaîtront à l'aide de la description ci-dessous et des figures l'accompagnant :

- la figure 1 représente schématiquement un exemple d'image filaire tridimensionnelle ;
- la figure 2 illustre une première étape de la mise en oeuvre du procédé selon l'invention, consistant à découper l'ensemble des valeurs d'ordonnées en intervalles $[Y(i), Y(i+1)[$ ;
- les figures 3 et 4 illustrent la détermination des points d'intersection dans un intervalle ;
- la figure 5 illustre une première relation d'ordre, permettant d'ordonner l'ensemble des arêtes d'une image ;
- la figure 6 illustre une seconde relation d'ordre, permettant d'ordonner localement les arêtes, au niveau d'une ligne donnée ;
- la figure 7 illustre le calcul de coordonnées du point d'intersection de deux arêtes, et le tri des points d'intersection sur une même arête, selon une troisième relation d'ordre ;
- les figures 8 à 17 illustrent la détermination de la valeur d'un indicateur pour chaque point d'intersection ;
- les figures 18 à 21 illustrent la détermination du nombre des facettes qui masquent la première extrémité de chaque arête d'une image ;
- la figure 22 représente un algorithme montrant la séquence des opérations réalisées sur une image.

La synthèse d'une image filaire tridimensionnelle comporte plusieurs étapes parmi lesquelles l'élimination des faces cachées n'est qu'une étape parmi d'autres. La synthèse consiste tout d'abord à extraire des informations dans une base de données, pour déterminer les facettes qui représenteront un objet sous la forme filaire ; puis opérer une transformation géométrique sur chacune des facettes pour la placer dans un repère cartésien qui est celui de l'observateur de l'image de synthèse et non plus dans le repère correspondant à la prise de vue ou aux calculs réalisés pour constituer la base de données. Puis un découpage est réalisé pour éliminer les facettes ou les parties de facette qui seront hors du champ de vision de l'observateur, ce champ ayant la forme d'une pyramide dont le sommet est l'oeil de l'observateur ; puis une projection des facettes sur le plan de visualisation est réalisée par une homotétie dont le rapport est fonction de la distance entre l'observateur et le point à projeter sur l'écran, et en fonction de la distance entre l'observateur et l'écran ; puis les parties cachées des facettes sont éliminées en éliminant certains segments des arêtes ; puis l'image est affichée sur un dispositif de visualisation, en calculant les signaux de déviation correspondant à chaque segment d'arête qui doit être allumé sur l'écran.

Seule l'étape d'élimination des faces cachées est décrite ci-dessous car les autres étapes sont bien connues.

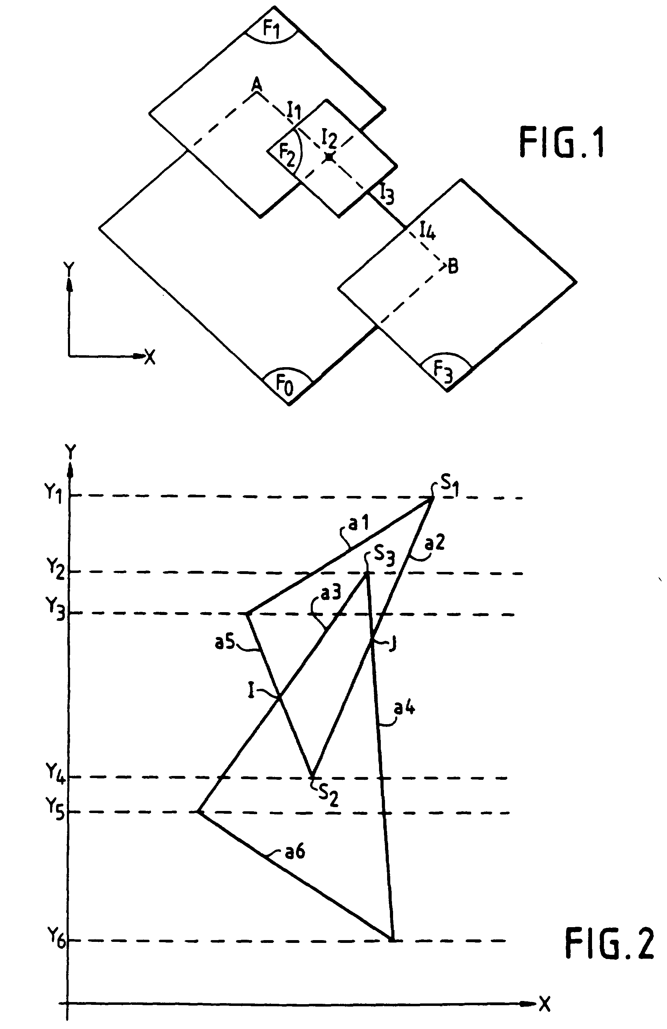

La figure 1 représente schématiquement un exemple d'image filaire tridimensionnelle dans laquelle un objet est représenté par quatre facettes F0, ..., F3 comportant chacune quatre arêtes. Dans cet exemple, on souhaite que les facettes paraissent de plus en plus proches de l'observateur, dans l'ordre F0, ..., F3. L'apparence de troisième dimension est donnée en éliminant certains segments des arêtes qui sont cachés par une facette qui doit être représentée comme étant plus proche de l'observateur. Par exemple, l'arête AB de la facette F0 comporte deux segments qui sont masqués, AI3 et I4B.

Divers procédés connus sont utilisables pour traduire, par une valeur de paramètre, la priorité d'une facette par rapport à un point d'une arête d'une autre facette. La valeur du paramètre de priorité d'un point peut être constituée par la valeur d'une coordonnée de ce point, sur un axe de coordonnées dirigé vers l'observateur. Ou bien, la valeur du paramètre de priorité peut être constituée par une valeur uniforme pour tous les points de toutes les arêtes d'une même facette, et croissante en fonction de la priorité attribuée à la facette. Dans la description qui suit, le paramètre de priorité est supposé être de ce dernier type, mais ceci ne limite en rien l'application du procédé selon l'invention.

La mise en oeuvre du procédé selon l'invention pour déterminer les parties cachées de toutes les arêtes d'une image comporte quatre parties principales.

Une première partie consiste à déterminer tous les points d'intersection des arêtes de l'image.

Dans cet exemple, la première partie du procédé détermine notamment les points d'intersection, I1, I2, I3, I4, de l'arête AB avec les arêtes des autres facettes : F1, ..., F3.

Une seconde partie consiste à : déterminer la valeur d'un indicateur pour chaque point d'intersection de l'image, cet indicateur indiquant si la facette de l'arête la plus prioritaire masque l'arête la moins prioritaire, à partir du point d'intersection considéré ; ou la masque avant le point d'intersection considéré ; ou bien, la masque avant et après le point d'intersection, chaque arête étant parcourue d'une première à une seconde extrémité.

Dans cet exemple, la seconde partie du procédé détermine, notamment, que la première extrémité, A, de l'arête AB, est masquée par une facette F1 ; puis, en parcourant l'arête dans le sens AB, détermine la valeur d'un indicateur pour chaque point d'intersection I1, I2, I3, I4.

L'indicateur déterminé pour le point d'intersection I1 indique que la facette F2, dont une arête crée l'intersection I1, masque l'arête AB à partir de I1. L'indicateur déterminé pour le point d'intersection I2 indique que la facette F1, dont une arête crée l'intersection I2, masque l'arête AB avant I2, mais pas après. L'indicateur déterminé pour le point d'intersection I3 indique que la facette F2, dont une arête crée l'intersection I3, masque l'arête AB avant I3, mais pas après. L'indicateur déterminé pour le point d'intersection I4 indique que la facette F3, dont une arête crée l'intersection I4, masque l'arête AB après I4.

Une troisième partie du procédé selon l'invention consiste à déterminer, pour la première extrémité de chaque arête, le nombre de facettes qui masquent cette première extrémité. Dans cet exemple, le nombre de facettes masquant la première extrémité, A, de l'arête AB est égal à 1.

Une quatrième et dernière partie du procédé selon l'invention consiste ensuite à déterminer, pour chaque arête, les segments qui sont visibles et ceux qui sont cachés, en déterminant le nombre n des facettes qui masquent chaque segment. Ce nombre n est calculé à partir du nombre de facettes qui masquent la première extrémité de l'arête et à partir des valeurs des indicateurs mentionnés précédemment. Si n est non nul, le segment ne doit pas être affiché.

Dans cet exemple, le nombre de facettes masquant l'extrémité A de l'arête AB est égal à 1, donc le segment AI1 est masqué par une facette, n=1, il ne doit donc pas être affiché. Au point d'intersection I1, l'indicateur correspondant à I1 indique que la facette F2 commence à masquer l'arête AB, le nombre n est alors incrémenté d'une unité, n=2, ce qui traduit que l'arête AB est masquée au delà de I1, par la facette F2, tout en continuant à être masquée par la facette F1. Le prochain point d'intersection est le point I2. Le segment I1I2 est donc masqué par deux facettes, F1 et F2. Il ne doit donc pas être affiché.

Le prochain point d'intersection est I3. Son indicateur indique que la facette F1 ne masque plus l'arête AB au delà du point I2, le nombre n est alors décrémenté d'une unité, n=1, ce qui traduit que la facette F2 continue à masquer l'arête AB au delà du point I2. Donc le segment I2I3 est masqué par une facette, F2, et ne doit pas être affiché.

Le prochain point d'intersection est I3. Son indicateur indique que la facette F2 ne masque pas l'arête AB au delà du point I3. Le nombre n est alors décrémenté d'une unité, n=0. Par conséquent, aucune facette ne masque l'arête AB depuis I3 jusqu'au prochain point d'intersection, I4. Le segment I3I4 n'est pas masqué, il doit donc être affiché sur l'écran.

Au point I4, l'indicateur indique que l'arête AB est masquée au delà du point I4 par la facette F3, le nombre n est alors incrémenté d'une unité, n=1. L'arête AB ne comporte pas d'autres points d'intersection avec d'autres arêtes. Par conséquent, la seconde extrémité de l'arête AB est située à l'intérieur de la facette F3 et celle-ci masque donc le segment I4B. Ce segment ne doit donc pas être affiché sur l'écran.

Cet exemple très simple fait apparaître le rôle des indicateurs, et fait apparaître la notion d'ordre des points d'intersection le long de chaque arête.

La figure 2 illustre, sur un exemple très simple, une première étape de la détermination de tous les points d'intersection des arêtes dans une image. Chaque point de l'image est repéré par ses coordonnées (x,y) dans un repère cartésien constitué d'un axe horizontal ox et d'un axe vertical oy, dont l'origine est en bas et à gauche de l'écran. Chaque arête est définie par : les coordonnées d'une première extrémité ; les coordonnées d'une seconde extrémité ; et par sa pente, celle-ci étant définie comme le rapport de la variation de l'abscisse x sur la variation correspondante de l'ordonnée y. Avec une telle définition de la pente, les arêtes dites horizontales, qui ont une ordonnée constante, ont une pente infinie.

Dans ce qui suit, on appelle arête horizontale toute arête dont les points ont une même valeur d'ordonnée. Par convention, la première extrémité d'une arête, appelée aussi début d'une arête, est celle ayant l'ordonnée maximale, si l'arête est non-horizontale ; et est celle ayant l'abscisse minimale lorsque l'arête est horizontale. La seconde extrémité d'une arête, appelée aussi fin d'une arête, est l'extrémité ayant l'ordonnée minimale, si l'arête est non-horizontale ; et est celle ayant l'abscisse maximale, si l'arête est horizontale.

La première étape de la détermination des points d'intersection de toutes les arêtes d'une image consiste à découper l'ensemble des valeurs d'ordonnée en intervalles $[Y(i),Y(i+1)[$ tels que chaque borne de ces intervalles ait la valeur d'ordonnée d'une extrémité d'arête, et tels qu'aucune ordonnée d'extrémité d'arête ne soit comprise dans ces intervalles. Sur la figure 2, l'exemple d'image est constitué de deux facettes triangulaires partiellement superposées. Les six extrémités d'arêtes de ces facettes ont pour ordonnées : Y1, ..., Y6, décroissantes dans cet ordre.

Une deuxième étape de la détermination de tous les points d'intersection de l'image consiste à considérer successivement, les intervalles : $[Y1,Y2[, [Y2,Y3[, [Y3,Y4[, [Y4,Y5[, [Y5,Y6[$, en détectant l'existence des points d'intersection situés dans chaque intervalle $[Y(i),Y(i+1)[$. Les intervalles sont considérés dans l'ordre des ordonnées décroissantes, dans cet exemple. Dans l'exemple représenté sur la figure 2, toutes les arêtes peuvent être considérées systématiquement en balayant successivement les lignes d'ordonnées Y1, Y2, Y3, Y4, Y5, Y6 et uniquement ces lignes. Le procédé consiste à déterminer l'existence des points d'intersection avant de rechercher leurs coordonnées. C'est plus rapide car la résolution d'un système d'équations pour déterminer un éventuel point d'intersection pour chaque couple d'arêtes, provoquerait une perte de temps pour chaque couple d'arêtes n'ayant pas d'intersection. Dans cet exemple, il y a deux points d'intersection, I et J, dont l'existence est déterminée au cours de la recherche des points d'intersection dans l'intervalle $[Y3, Y4[$.

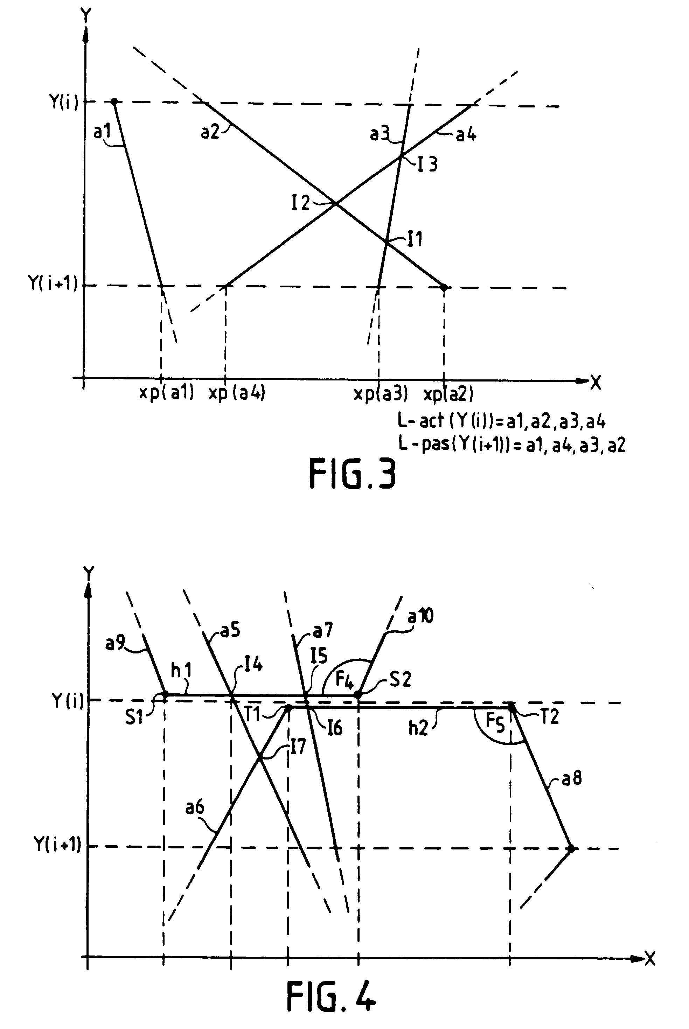

Pour plus de clarté, la figure 3 illustre par un exemple très simple, la détection de l'existence des points d'intersection, alors que la figure 4 illustre cette détection par un exemple plus compliqué qui correspond au cas général.

Sur cette figure 3, quatre arêtes non-horizontales, a1, a2, a3, a4, sont susceptibles d'avoir des points d'intersection, à l'intérieur d'un intervalle [Y(i),Y(i+1)[. Le procédé consiste à ne considérer que les arêtes dites actives sur la ligne courante Y(i), c'est-à-dire susceptibles d'avoir une intersection dans l'intervalle considéré ; et à en dresser une liste, L-act(Yi)), ordonnée en fonction des abscisses des points dits points de passage sur la ligne courante, qui sont les points que ces arêtes possèdent respectivement à l'ordonnée Y(i). Accessoirement cette liste est ordonnée selon les pentes croissantes, lorsque plusieurs arêtes non-horizontales ont le même point de passage, ou le même début, sur la ligne d'ordonnée Y(i).

Dans cet exemple, les points de passage des arêtes sur la ligne courante ont des abscisses croissantes dans l'ordre : a1, a2, a3, a4.

$$L\text{-act}(Yi) = a1, a2, a3, a4.$$

Il est à remarquer que, dans cet exemple, l'arête a1 a son début situé à l'ordonnée Y(i) et que ce point constitue son point de passage à l'ordonnée Y(i).

Le procédé consiste ensuite à considérer les points de passage de ces arêtes sur la ligne d'ordonnée Y(i+1), en dressant une deuxième liste des mêmes arêtes mais ordonnées en fonction des abscisses des points de passage de ces arêtes sur la ligne d'ordonnée Y(i+1). Ces abscisses peuvent être calculées à partir de la valeur des coordonnées des extrémités des arêtes et à partir de leur pente. Dans cet exemple, les abscisses des points de passage des arêtes a1, a2, a3, a4, sur la ligne d'ordonnée Y(i+1) sont respectivement : xp(a1), xp(a2), xp(a3), xp(a4). La liste de ces abscisses ordonnées selon les valeurs croissantes est : xp(a1), xp(a4), xp(a3), xp(a2). La deuxième liste d'arêtes est notée L-pas(Y(i+1)). Dans cet exemple,

$$L\text{-pas}(Y(i+1)) = a1, a4, a3, a2.$$

Une comparaison entre la liste L-pas(Y(i)) et la liste L-act(Y(i+1)), montre qu'il y a permutation de l'ordre des points de passage de certaines arêtes, et permet de détecter l'existence de points d'intersection. La permutation de a3 et a2 indique l'existence d'un point d'intersection I1 entre les arêtes a3 et a2. La permutation de l'ordre de a4 et a2 indique l'existence d'un point d'intersection I2 entre les arêtes a4 et a2. La permutation de a4 et a3 indique l'existence d'un point d'intersection I3 entre les arêtes a4 et a3. L'arête a1 a conservé sa place par rapport aux autres arêtes, par conséquent il n'y a pas d'intersection entre l'arête a1 et les autres arêtes actives sur la ligne courante considérée.

La figure 4 illustre la détection de l'existence des intersections dans un cas plus général où il y a aussi des intersections entre une arête horizontale et une arête non-horizontale, ou bien entre deux arêtes horizontales. Dans cet exemple, un facette F4 possède une arête horizontale h1 ayant une première et une seconde extrémité, S1 et S2, sur la ligne d'ordonnée Y(i), et une seconde facette F5 possède une arête horizontale h2 ayant deux extrémités, T1 et T2, situées sur la ligne d'ordonnée Y(i). La facette F4 est située entièrement au-dessus de cette ligne alors que la facette F5 est située entièrement en-dessous de cette ligne, cependant leurs arêtes h1 et h2 ont un segment commun T1S2.

Dans un tel cas, les deux arêtes, h1 et h2, sont traitées comme deux arêtes totalement indépendantes. Par contre, dans le cas où deux facettes ont une arête commune, sur toute sa longueur, le procédé consiste à ne considérer qu'une seule arête. Chaque arête est associée à une liste des facettes auxquelles elle appartient, afin de pouvoir retrouver rapidement ces facettes.

Le procédé consiste à dresser une première liste, L-act(Y(i)), des arêtes susceptibles d'avoir des points d'intersection dans l'intervalle [Y(i),Y(i+1)[, incluant la valeur Y(i). La facette F4 comporte une arête susceptible d'avoir de tels points d'intersection, c'est l'arête h1. Par contre, les arêtes a9 et a10 de la facette F4 ne sont pas considérées comme actives. Elles se terminent sur la ligne d'ordonnée Y(i), elles ne sont donc pas susceptibles d'avoir de points d'intersection à l'intérieur de l'intervalle. La facette F5 comporte trois arêtes susceptibles d'avoir des points d'intersection dans l'intervalle et sur sa borne Y(i), ce sont : a2, a6, a8. En outre, dans cet exemple, deux arêtes non-horizontales, a5 et a7, ont un point de passage sur la ligne d'ordonnée Y(i). L'arête a5 coupe seulement l'arête h1. L'arête a7 coupe la partie commune des arêtes h1 et h2.

Les arêtes horizontales h1 et h2 ont une infinité de points de passage sur la droite d'ordonnée Y(i). La liste L-act(Y(i)) est alors dressée en représentant l'arête horizontale h1 par son extrémité S1 et par son extrémité S2, et en représentant l'arête horizontale h2 par son extrémité T1 et par son extrémité T2, en ordonnant les arêtes non-horizontales selon les abscisses de leur point de passage sur la ligne d'ordonnée Y(i) et en ordonnant les extrémités des arêtes horizontales selon les abscisses de ces extrémités.

$$L\text{-act}(Y(i)) = S1, a5, a6, T1, a7, S2, T2, a8.$$

En pratique, chaque symbole de cette liste est muni d'un marqueur pouvant prendre trois valeurs, pour indiquer si le symbole désigne : une arête non-horizontale ; un début d'arête horizontale ; ou une fin d'arête horizontale. La liste L-act(Y(i)) est tout d'abord utilisée seule, pour détecter les points d'intersection sur la ligne d'ordonnée Y(i) ; puis elle est allégée en supprimant les extrémités d'arêtes horizontales et elle est comparée avec une deuxième liste, L-pas(Y(i+1)), pour détecter les points d'intersection qui sont situés entre les lignes d'ordonnées Y(i) et Y(i+1), non incluses.

Dans cet exemple, la liste L-act(Y(i)) permet de conclure à l'existence d'un point d'intersection I4 entre l'arête h1 et l'arête a5, puisque a5 est situé dans la liste entre les extrémités S1 et S2 ; permet de conclure à l'existence d'un point d'intersection I5 entre l'arête a7 et l'arête h1, puisque, dans la liste, a7 est compris entre S1 et S2 ; et permet de conclure à l'existence d'un point d'intersection I6 entre l'arête a7 et l'arête h2, puisque, dans la liste, a7 est compris entre T1 et T2. En réalité, les points d'intersection I5 et I6 sont confondus, mais leur dédoublement découle du fait que les arêtes h1 et h2 sont considérées comme indépendantes bien qu'elles aient une partie commune.

La liste L-act(Y(i)) met aussi en évidence l'existence d'un segment commun T1S2, commun aux arêtes h1 et h2.

Pour déduire, de la première liste L-act(Y(i)), l'existence de points d'intersection situés sur la ligne d'ordonnée Y(i), le procédé consiste à :

- lire entièrement la liste L-act(Y(i)) en mettant à jour une troisième liste L-hor(Y(i)) qui est vide au début de la lecture de L-act(Y(i)) ; troisième liste dans laquelle chaque arête horizontale est inscrite lorsque sa première extrémité est lue dans L-act(Y(i)) ; et dans laquelle cette arête horizontale est effacée lorsque sa seconde extrémité est lue dans L-act(Y(i)), la première et la seconde extrémité de chaque arête horizontale étant distinguées par le marqueur ;

- conclure qu'il existe une intersection chaque fois qu'une arête non-horizontale ou une première extrémité d'arête horizontale est lue dans L-act(Y(i)) alors qu'une arête horizontale est présente sur la troisième liste L-hor(Y(i)).

L'existence des points d'intersection entre arêtes non-horizontales, telles que a5 et a6, est détectée ensuite, en constituant une liste L-act′(Y(i)) des arêtes non-horizontales, présentes dans la liste L-act(Y(i)). L-act′(Y(i)) est obtenue en supprimant dans L-act(Y(i)) les extrémités S1, S2, T1, T2, des arêtes horizontales h1 et h2 :

$$L\text{-act}'(Y(i)) = a5, a6, a7, a8.$$

Puis cette liste est comparée à la liste L-pas(Y(i+1)) des mêmes arêtes réordonnées selon les abscisses croissantes des points de passage de ces arêtes sur la ligne d'ordonnée Y(i+1), après avoir calculé ces abscisses.

$$L\text{-pas}(Y(i+1)) = a6, a5, a7, a8.$$

La comparaison de L-act′(Y(i)) et de L-pas(Y(i+1)) permet de conclure à l'existence d'un point d'intersection I7 entre a5 et a7.

En pratique le procédé consiste, systématiquement, pour tous les intervalles [Y(i),Y(i+1)[, à déterminer tout d'abord les points d'intersection situés sur la ligne courante d'ordonnée Y(i), puis à déterminer les points d'intersection situés entre les ordonnées Y(i) et Y(i+1), non inclus. Mais il faut en outre réaliser une détection des points d'intersection entre arêtes horizontales sur la ligne d'ordonnée Y(i+1) minimale correspondant au dernier intervalle traité dans l'image considérée, pour ne pas omettre d'éventuels segments d'arêtes qui sont sur cette ligne.

Le problème essentiel dans cette détermination des points d'intersection est de pouvoir réaliser les calculs en temps réel. Pour gagner du temps dans la constitution des listes, le procédé consiste à déduire la liste, L-act(Y(i)), pour l'intervalle courant [Y(i),Y(i+1)[, à partir de la liste, L-pas(Y(i)), établie pour l'intervalle traité immédiatement précédemment, c'est-à-dire l'intervalle [Y(i-1),Y(i)[, en ajoutant, à cette seconde liste, des arêtes qui sont prises sur une liste L-gen prédéterminée.

L-gen est une liste ordonnée de l'ensemble de toutes les arêtes de l'image, les arêtes horizontales étant représentées par leur début et par leur fin. Toutes les arêtes de L-gen sont ordonnées, en ordonnant les arêtes non-horizontales, selon les valeurs décroissantes des ordonnées de leurs débuts et, accessoirement selon leurs pentes, lorsque plusieurs arêtes non-horizontales ont des débuts ayant la même ordonnée ; et en ordonnant les arêtes horizontales selon leurs ordonnées, et accessoirement selon les abscisses de leurs débuts lorsque plusieurs arêtes horizontales ont la même ordonnée.

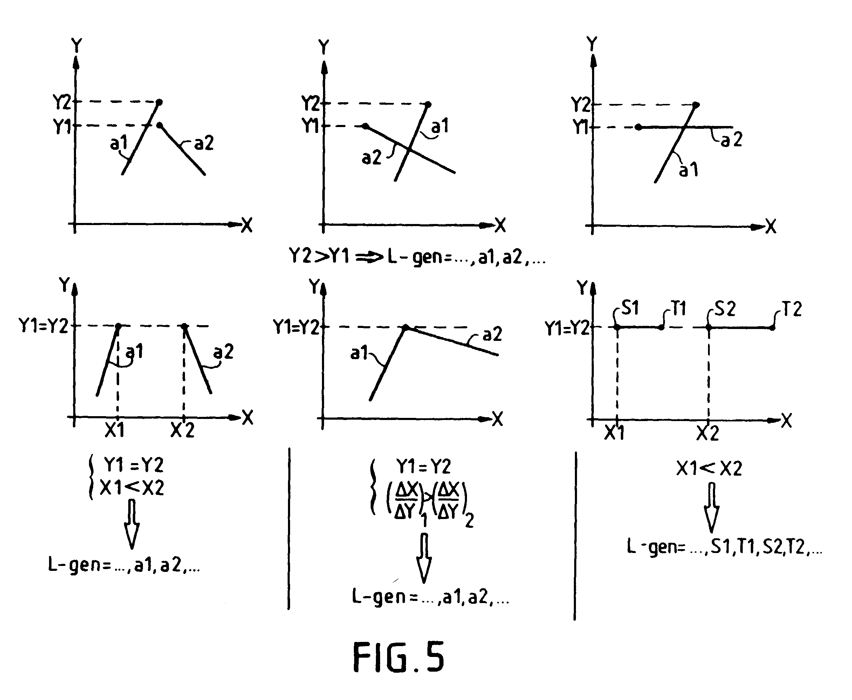

La figure 5 montre des exemples d'application de cette première relation d'ordre, notamment dans des cas particuliers. Lorsque deux arêtes ont des débuts ayant la même ordonnée, cette relation d'ordre prend en compte en outre la valeur de l'abscisse du début de chacune de ces arêtes. Elles sont alors ordonnées dans l'ordre des abscisses croissantes. Lorsque plusieurs arêtes ont le même début, la relation d'ordre prend en compte en outre la pente de chacune de ces arêtes. Cette première relation d'ordre permet donc d'établir de manière unique une liste de l'ensemble de toutes les arêtes de l'image, L-gen, ordonnée selon les critères de cette première relation d'ordre.

Dans l'exemple représenté sur la figure 2, cette liste L-gen de l'ensemble de toutes les arêtes de l'image est : a1, a2, a3, a4, a5, a6. Les débuts de ces arêtes sont situés sur des lignes horizontales ayant des ordonnées dont les valeurs, rangées par ordre d'ordonnées décroissantes, sont : Y1, ..., Y7.

La liste L-act(Y(i)) est déterminée successivement pour chacun des intervalles [Y(i),Y(i+1)[, dans l'ordre correspondant à une décroissance des ordonnées Y(i). Elle est déduite de la liste L-pas(Y(i)) en y ajoutant les arêtes qui ont un début dont l'ordonnée est égale à Y(i) et en y enlevant les arêtes qui ont une fin dont l'ordonnée est égale à Y(i). Les arêtes à ajouter sont déterminées en lisant dans la liste L-gen les arêtes qui suivent celles ayant déjà été inscrites dans la liste L-act (Y(i-1)) précédemment ; et en comparant l'ordonnée du début de chaque arête lue dans L-gen, avec la valeur Y(i). Seules conviennent les arêtes dont le début a une ordonnée égale à Y(i).

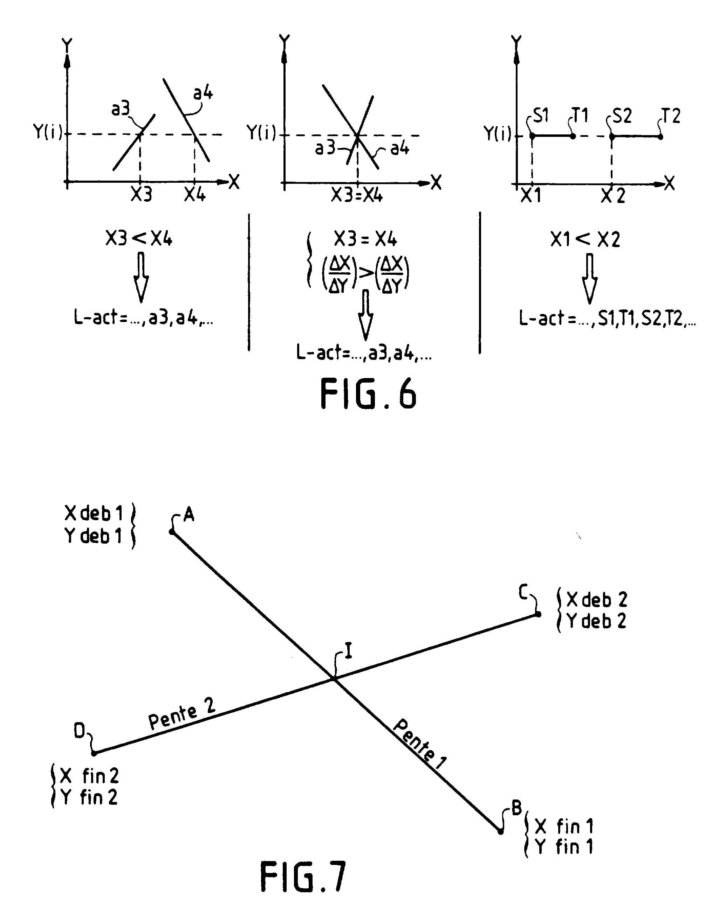

La liste L-act(Y(i)) est ordonnée selon une deuxième relation d'ordre ayant pour critère principal la valeur de l'abscisse du début de chaque arête, comme cela a été mentionné précédemment à propos des figures 3 et 4. Lorsque deux arêtes ont la même valeur d'abscisse pour leur début, la seconde relation d'ordre prend en compte en outre la valeur de la pente. La figure 6 illustre trois exemples d'application de deuxième relation d'ordre pour déterminer la liste L-act(Y(i)).

A titre d'exemple, considérons la détermination des listes L-act(Y(i)) à partir de la liste L-gen, pour l'image de la figure 2. Lorsque l'intervalle [Y1,Y2[ est l'intervalle courant pour la détermination des points d'intersection, la liste L-act(Y1) est constituée en recherchant, dans la liste L-gen = a1, a2, a3, a5, a6, les arêtes ayant leur début sur la ligne d'ordonnée Y1, puis en les ordonnant selon la seconde relation d'ordre. Dans cet exemple, il n'y a pas de permutation à réaliser, car dans L-gen a1 et a2 étaient déjà ordonnées selon les pentes croissantes.

$$L\text{-act}(Y1) = a1, a2.$$

La liste L-pas(Y1) est déterminée en calculant les abscisses des points de passage des arêtes a1 et a2 sur la ligne d'ordonnée Y2 ; et en comparant leurs valeurs, pour ordonner ces arêtes dans l'ordre correspondant aux abscisses croissantes. Dans cet exemple, il n'y a pas de permutation :

$$L\text{-pas}(Y2) = a1, a2.$$

La liste L-act(Y2) est alors déduite de la liste L-pas(Y2) en y ajoutant des arêtes lues dans la liste L-gen, après les arêtes, a1 et a2, qui ont déjà été inscrites dans la liste L-act(Y1). Seules sont ajoutées celles qui ont leur début sur la ligne d'ordonnée Y2. La liste L-gen étant ordonnée selon les ordonnées décroissantes, cette recherche peut être arrêtée dès qu'une arête ne remplit pas cette condition. Dans cet exemple, les arêtes a4 et a5 remplissent cette condition, et a6 ne la remplit pas.

Il faut, en outre, effacer de L-pas(Y2) les arêtes qui ont leur fin sur la ligne d'ordonnée Y2, en comparant la valeur d'ordonnée de la fin de chacune des arêtes de L-pas(Y2), avec la valeur Y2. Dans cet exemple, aucune arête n'est à effacer. Enfin, il faut ordonner, selon la deuxième relation d'ordre, les arêtes qui vont constituer la liste L-act. Dans cet exemple, les abscisses des points de passage de a1 et a2 ont été calculées immédiatement précédemment. Il reste à les comparer à l'abscisse du début de a3 et du début de a4, puis à ordonner les arêtes selon la deuxième relation d'ordre :

$$L\text{-act}(Y2) = a1, a3, a4, a2.$$

La liste L-pas(Y3) est constituée en calculant les abscisses des points de passage des arêtes a1, a3, a4, a2 sur la ligne d'ordonnée Y3 ; et en comparant ces abscisses, pour ordonner ces arêtes dans l'ordre correspondant aux abscisses croissantes. Dans cet exemple, il n'y a pas de permutation :

$$L\text{-pas}(Y3) = a1, a3, a4, a2.$$

La liste L-act(Y3) est alors déduite de la liste L-pas(Y3) en y ajoutant des arêtes lues dans la liste L-gen, après a1, a2, a3, a4 qui ont déjà été inscrites dans cette liste L-act(Y2). Seules sont ajoutées celles qui ont leur début sur la ligne d'ordonnée Y3. Dans cet exemple, seule l'arête a5 remplit ces conditions. Il faut en outre, effacer de L-pas(Y2) les arêtes qui ont leur fin sur la ligne d'ordonnée Y3, en comparant l'ordonnée de la fin de chacune des arêtes de L-pas(Y3) avec la valeur Y3. Dans cet exemple, l'arête a1 est à effacer de cette liste. Enfin, il faut ordonner, selon la deuxième relation d'ordre, les arêtes qui vont constituer la liste L-act(Y3). Dans cet exemple, cela consiste à comparer l'abscisse du début de l'arête à ajouter, a5, avec les abscisses des points de passage des arêtes restantes : a3, a4, a2. Ces abscisses sont immédiatement disponibles puisqu'elles viennent d'être calculées pour établir la liste L-pas(Y2). Les arêtes sont ensuite ordonnées dans l'ordre correspondant aux abscisses croissantes :

$$L\text{-act}(Y3) = a5, a3, a4, a2.$$

Il est à remarquer que les ordonnées des débuts d'arête n'interviennent plus du tout dans la deuxième relation d'ordre, ce qui conduit parfois à avoir un ordre différent dans la liste L-act et dans la liste L-gen pour des arêtes identiques.

La première et la deuxième relation d'ordre ainsi définies donnent à l'ensemble des arêtes une structure d'ordre total, qui permet de trouver, d'une manière certaine et reproductible, tous les points d'intersection des arêtes entre elles, en minimisant les calculs nécessaires, donc en réduisant le temps de calcul. L'application des critères définissant ces deux relations d'ordre peut être faite selon diverses techniques de tris très classiques : le tri par bulle appelé aussi surf ; ou le tri par arbre ; ou le tri par fusion.

Quelle que soit la technique de tri utilisée, la durée du tri de la liste L-act(Y(i)) est considérablement réduite par le fait que la liste L-act(Y(i)) peut être déduite de la liste L-pas(Y(i)) qui est constituée juste avant, et de la liste L-gen constituée une fois pour toute au début du traitement d'une image. En effet, ces deux listes sont ordonnées dans un ordre proche de l'ordre qui sera celui de L-act(Yi), le tri converge alors très vite.

Il est à remarquer que le fait d'avoir ordonné selon leur pente, des arêtes ayant le même début, permet d'éviter de détecter une éventuelle permutation de ces arêtes au moment de la recherche des points d'intersection. Ceci évite donc le calcul inutile des coordonnées d'un point d'intersection constitué par le début commun de ces deux arêtes.

Au cours de la détection de l'existence des points d'intersection des arêtes non-horizontales, le tri des abscisses des points de passage des arêtes sur la ligne d'ordonnée Y(i+1), selon les abscisses croissantes, peut être réalisé selon diverses techniques de tri connues. Par exemple ce tri peut être réalisé par permutations. Il consiste alors à considérer successivement chaque arête de la liste L-act(Y(i) ; et à comparer, pour chaque arête, l'abscisse de son point de passage avec l'abscisse du point de passage de l'arête immédiatement précédente dans cette liste. Si l'abscisse du point de passage de l'arête précédente est supérieure à l'abscisse du point de passage de l'arête considérée, ces deux arêtes doivent être permutées dans la liste L-pas et le tri est poursuivi en comparant l'abscisse du point de passage de l'arête considérée avec l'abscisse du point de passage de la deuxième arête la précédant dans la liste L-act.

Ces comparaisons d'abscisses sont poursuivies en remontant la liste L-act tant qu'il y a des permutations à réaliser. Lorsque ce procédé a été appliqué à chaque arête de la liste L-act, en la remontant de la dernière à la première arête, la liste définitive L-pas est obtenue. Il est à remarquer que cette nouvelle liste est obtenue avec, au plus, une comparaison inutile pour chaque arête de la liste L-act, cette comparaison correspondant au cas où il n'y a pas de permutation à réaliser et qui conclut la suite des comparaisons pour l'arête considérée.

Considérons, par exemple, le tri par permutations réalisé pour ordonner la liste L-pas(Y(i+1)) dans le cas de la figure 3. La liste des arêtes actives sur la ligne Y(i) est :

$$L\text{-act}(Y(i)) = a1, a2, a3, a4.$$

Au début du calcul pour la ligne d'ordonnée Y(i), la liste L-pas(Y(i+1)) est vide. Le tri par permutation consiste tout d'abord à inscrire l'arête a1 dans cette liste L-pas. Une seconde étape consiste à comparer l'abscisse xp(a2) du point de passage de l'arête a2 sur la ligne d'ordonnée Y(i+1) à l'abscisse xp(a1) du point de passage de l'arête a1 sur cette même ligne. Dans cet exemple, il n'y a pas de permutation car xp(a1) est inférieure à xp (a2). Les comparaisons concernant l'arête a2 sont donc terminées.

$$L\text{-pas}(Y(i+1)) = a1, a2.$$

Une troisième étape consiste à comparer l'abscisse xp(a3) du point de passage de l'arête a3, à l'abscisse xp(a2) de l'arête a2. Ces deux arêtes doivent être permutées, par rapport à l'ordre dans la liste L-act(Y(i)), parce que xp(a3) est inférieure à xp(a2) Avant de placer l'arête a3 dans la liste L-pas, il est nécessaire de comparer l'abscisse xp(a1) de l'arête a1 à l'abscisse xp(a3) de l'arête a3. I1 n'y a pas de permutation à réaliser parce que xp(a3) est supérieure à xp(a1). La liste devient donc :

$$L\text{-pas}(Y(i+1)) = a1, a3, a2.$$

Il apparaît donc une permutation de a2 et a3, qui correspond à l'existence d'un point d'intersection I1 dont les coordonnées sont faciles à déterminer à partir des coordonnées des débuts et des fins des arêtes a2 et a3. Ce calcul de coordonnées peut être réalisé immédiatement pour gagner du temps.

Une quatrième étape consiste à comparer l'abscisse xp(a4) du point de passage de l'arête a4, à l'abscisse xp(a2) du point de passage de l'arête a2. Une permutation de ces deux arêtes doit être réalisée parce que xp(a4) est inférieure à xp(a2). Il est nécessaire ensuite de comparer l'abscisse xp(a4) du point de passage de l'arête a4, à l'abscisse xp (a3) du point de passage de l'arête a3. Une permutation des arêtes a4 et a3 doit être réalisée parce que xp(a4) est inférieure à xp (a3). Pour pouvoir placer a4 dans la liste, il reste à comparer l'abscisse xp(a4) du point de passage de l'arête a4, avec l'abscisse xp(a1) du point de passage de l'arête a1. Il n'y a pas de permutation à réaliser car xp(a1) est inférieure à xp(a3). La liste définitive est donc :

$$L\text{-pas}(Y(i+1)) = a1, a4, a3, a2.$$

Les deux permutations réalisées au cours de cette troisième étape correspondent aux points d'intersection I2 et I3. Les coordonnées de ces points peuvent être calculées immédiatement pour gagner du temps.

Une liste des points d'intersection est constituée en stockant en mémoire, pour chaque point d'intersection, les coordonnées de ce point d'intersection et l'identité des deux arêtes possédant ce point d'intersection. A partir de la liste L-gen de toutes les arêtes de l'image, est constituée une liste des points d'intersection pour chaque arête, cette liste étant ensuite ordonnée selon la position des points d'intersection entre la première et la seconde extrémité de cette arête. Par exemple, cette liste peut être ordonnée selon les distances décroissantes par rapport à la seconde extrémité de l'arête. Pour simplifier les calculs nécessaires au tri des points d'intersection sur chaque arête, le procédé selon l'invention consiste à calculer une valeur proportionnelle à cette distance, cette valeur étant en outre utilisée pour le calcul des coordonnées du point d'intersection, ce qui évite donc des calculs supplémentaires pour ordonner les points d'intersection.

Considérons l'exemple représenté sur la figure 7, et montrons qu'une valeur intermédiaire T(I), intervenant dans le calcul des coordonnées du point d'intersection I, permet de connaître la position du point I par rapport à une extrémité de l'une des arêtes possédant le point I comme point d'intersection. Dans cet exemple, le point I est le point d'intersection d'une arête AB et d'une arête CD. Le point A a pour coordonnées (Xdeb1,Ydeb1) et constitue le début de l'arête AB. Le point B a pour coordonnées (Xfin1,Yfin1) et constitue la fin de l'arête AB. Le point C a pour coordonnées (Xdeb2,Ydeb2) et constitue le début de l'arête CD. Le point D a pour coordonnées (Xfin2,Yfin2) et constitue la fin de l'arête CD.

Chaque point de l'arête AB satisfait le système d'équations suivant :

$$X = Xfin1 + t(I).(Xdeb1 - Xfin1)$$
$$Y = Yfin1 + t(I).(Ydeb1 - Yfin1) \tag{1}$$

avec $t(I) = IB/AB$ qui est compris entre 0 et 1. De même chaque point de l'arête CD satisfait un système d'équations similaire comportant une autre valeur de paramètre : $t'(I)$ :

$$X = Xfin2 + t'(I).(Xdeb2 - Xfin2)$$
$$Y = Yfin2 + t'(I).(Ydeb2 - Yfin2) \tag{2}$$

Les coordonnées du point d'intersection I doivent satisfaire le système d'équations :

$$t(I) . (Xdeb1-Xfin1)-t'(I). (Xdeb2-Xfin2)= (Xfin2 - Xfin1)$$
$$t(I) . (Ydeb1-Yfin1)-t'(I). (Ydeb2-Yfin2)=(Yfin2 -Yfin1) \tag{3}$$

On montre que les coordonnées du point d'intersection obtenues en résolvant ce système d'équations sont :

$$X(I) - Xfin1 + T(I).Pente1$$
$$Y(I) = Yfin1 + T(I) \tag{4}$$

où le paramètre $T(I)$ est égal à :

$$T(I) = t(I).(Ydeb1 - Yfin1) = \frac{IB}{AB} .(Ydeb1-Yfin1) \tag{5}$$

et peut être calculé selon la formule :

$$T(I) = \frac{(Yfin2-Yfin1) .Pente2- (Xfin2-Xfin1)}{Pente2-Pente1} \tag{6}$$

avec

$$Pente1 = \frac{Xdeb1-Xfin1}{Ydeb1-Yfin1}$$

$$Pente2 = \frac{Xdeb2-Xfin2}{Ydeb2-Yfin1}$$

Le calcul de $T(I)$ selon la formule (6) permet non seulement de calculer les coordonnées du point d'intersection I, en remplaçant $T(I)$ par sa valeur dans le système d'équation (4), mais permet aussi d'ordonner la liste des points d'intersection, lorsqu'une arête comporte plusieurs points d'intersection respectivement avec plusieurs autres arêtes. En effet, pour une des arêtes, AB, par exemple, la formule (5) montre que le paramètre $T(I)$ est proportionnel à la distance IB, puisque la longueur AB est une constante et que la différence entre Ydeb1 et Yfin1 est aussi une constante.

Chaque fois qu'un point d'intersection est détecté, l'arête la moins prioritaire, parmi les deux arêtes qui définissent ce point d'intersection, est sélectionnée puis la valeur $T(I)$ est calculée pour déterminer les coordonnées de ce point d'intersection et pour insérer ce point dans la liste des points d'intersection existants sur l'arête considérée, cette liste étant ordonnée selon les valeurs de $T(I)$ décroissantes.

La détermination d'un indicateur pour chaque point d'intersection est donc, elle aussi, réalisée avantageusement au fur et à mesure de la détection de l'existence des points d'intersection. Elle consiste donc, tout d'abord, à déterminer quelle est l'arête la moins prioritaire parmi les deux arêtes possédant le point d'intersection considéré. L'arête la moins prioritaire est celle qui sera masquée partiellement par la facette à laquelle appartient l'arête la plus prioritaire. Dans cet exemple, la priorité est définie par une valeur de paramètre, constante pour toutes les arêtes d'une facette. L'arête la moins prioritaire est donc déterminée en comparant la valeur du paramètre de priorité de sa facette avec la valeur du paramètre de priorité de la facette de l'autre arête.

L'indicateur déterminé pour le point d'intersection considéré sera attaché à l'arête la moins prioritaire car c'est elle qui sera masquée, l'intersection n'ayant aucun effet sur la visibilité de l'arête la plus prioritaire. Cet indicateur indique si l'arête la moins prioritaire est masquée à partir du point d'intersection considéré, ou avant le point d'intersection considéré, l'arête la moins prioritaire étant parcourue depuis son début jusqu'à sa fin. Dans le premier cas, l'indicateur a une valeur notée DA, traduisant le début d'activité de la facette masquante, et dans le second cas une valeur FA traduisant la fin d'activité de la facette masquante. Il y a un troisième cas, où une arête est commune à deux facettes. Si cette arête coupe une autre arête, moins prioritaire par rapport à ces facettes, le point d'intersection marque la fin d'activité d'une facette et marque le début d'activité de l'autre facette, et l'arête est donc masquée avant et après le point d'intersection.

La valeur d'un indicateur $IND(I)$ pour chaque point d'intersection I, est déterminée en fonction de :

- l'ordre des deux arêtes possédant l'intersection, dans la première liste $L-act(Y(i))$ correspondant à l'intervalle $[Y(i),Y(i+1)[$ où est trouvé le point d'intersection considéré ;
- la position de la facette la plus prioritaire par rapport à l'arête qui fait partie de cette facette et qui possède le point d'intersection considéré.

La détermination de la valeur de l'indicateur nécessite donc d'introduire la notion de bord haut, de bord bas, de bord droit, et de bord gauche d'une facette ; et nécessite ensuite de distinguer neuf cas.

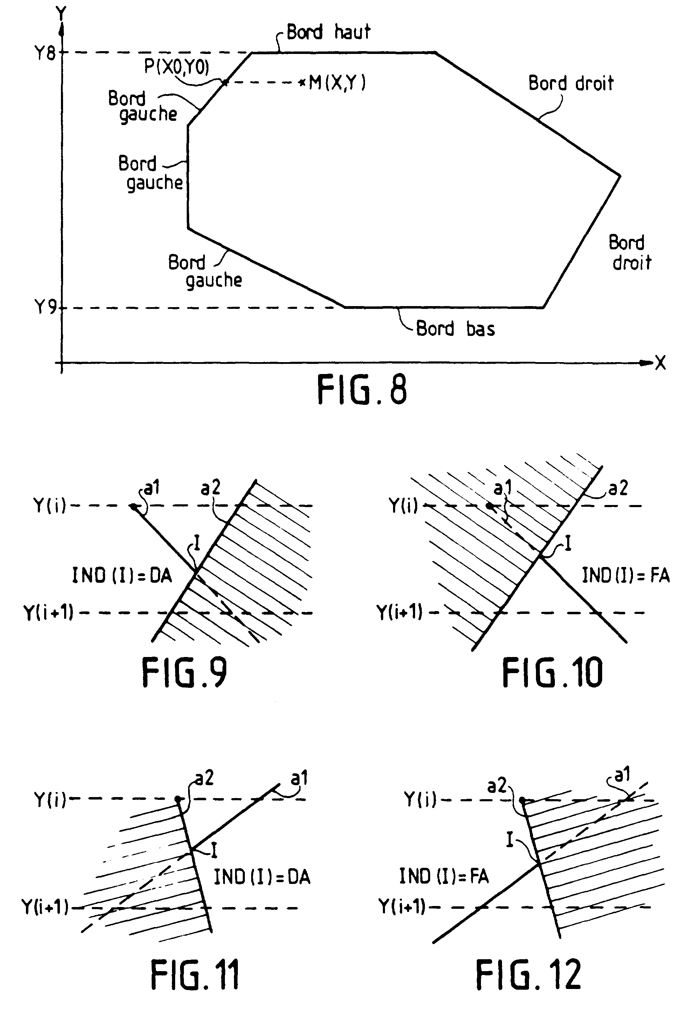

La figure 8 représente une facette et illustre la définition de ces quatre types de bord. Une arête horizontale d'ordonnée Y8 est appelée bord haut de la facette considérée, si tout point $M(X,Y)$ appartenant à cette facette a une ordonnée Y strictement inférieure à Y8. Une arête horizontale d'ordonnée Y9 est appelée bord bas, si tout point M(X, Y) appartenant à la facette a une ordonnée Y strictement supérieure à Y9.

Une arête non-horizontale est appelée bord gauche pour une facette donnée, si, pour tout point P(X0,Y0) de cette arête, il existe au moins un point M(X,Y) appartenant à la facette et tel que Y est égale à Y0 et tel que X est strictement supérieure à X0.

Une arête non-horizontale est appelée bord droit pour une facette donnée, si, pour tout point Q(X1,Y1) de l'arête, il existe au moins un point M(X,Y) appartenant à la facette tel que Y est égale à Y1 et tel que X est strictement supérieure à X1.

Comme il a été mentionné précédemment, une arête peut être commune à deux facettes. Elle peut donc être simultanément un bord droit pour une première facette et un bord gauche pour une seconde facette. De même, une arête peut être simultanément un bord haut et un bord bas.

Les figures 9 à 17 illustrent les neuf cas à distinguer pour la détermination de l'indicateur IND(I). Chaque fois, l'arête la plus prioritaire est notée a2 et l'arête la moins prioritaire est notée a1. Dans le premier cas, représenté sur la figure 9, l'arête prioritaire constitue le bord gauche de la facette à laquelle elle appartient, d'autre part elle est située après l'arête la moins prioritaire, a1, dans la liste L-act(Y(i)). Dans ce cas, la facette masque l'arête a1 après le point d'intersection I. Le point I est un point de début d'activité de masquage pour la facette. La valeur DA est attribuée à l'indicateur IND(I).

Dans le cas représenté sur la figure 10, l'arête la plus prioritaire, a2, constitue un bord droit de la facette la plus prioritaire ; d'autre part elle est située après l'arête la moins prioritaire, a1, dans la liste L-act(Y(i)). Dans ce cas la facette masque l'arête a1 avant le point I. Le point I est un point de fin d'activité de masquage pour la facette. La valeur FA est attribuée à l'indicateur IND(I).

Dans le cas représenté sur la figure 11, l'arête la plus prioritaire, a2, constitue un bord droit de la facette la plus prioritaire ; d'autre part, elle est située avant l'arête a1 dans la liste L-act(Y(i)). Dans ce cas, la facette masque l'arête a1 après le point intersection I, par conséquent la valeur DA est attribuée à l'indicateur IND(I).

Dans le cas représenté sur la figure 12, l'arête la plus prioritaire, a2, constitue le bord gauche de la facette la plus prioritaire ; d'autre part, elle est située avant l'arête a1 dans la liste L-act(Y(i)). La facette masque l'arête a1 avant le point I, par conséquent la valeur FA est attribuée à l'indicateur IND(I).

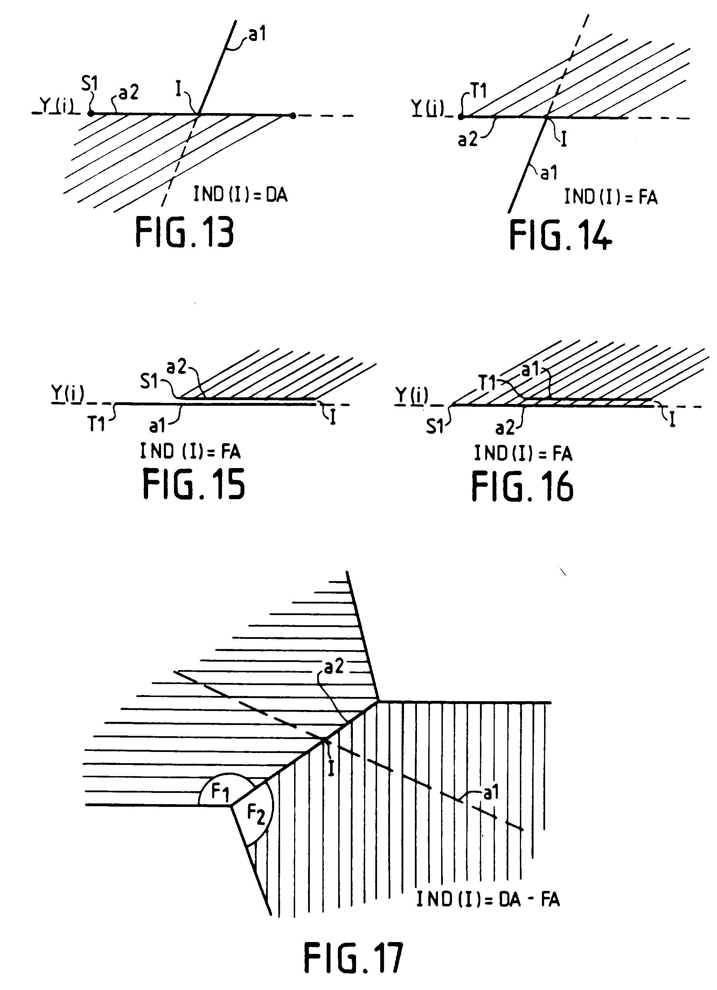

Dans le cas représenté sur la figure 13, l'arête la plus prioritaire, a2, est une arête horizontale située à l'ordonnée Y(i) et elle constitue le bord haut de la facette la plus prioritaire. Le début S1 de l'arête a2 est situé avant l'arête a1 dans la liste L-act(Y(i)), ce qui correspond au fait que la facette commence à masquer l'arête a1 à partir du point d'intersection I. Par conséquent la valeur DA est attribuée à l'indicateur IND(I).

Dans le cas représenté sur la figure 14, l'arête la plus prioritaire, a2 est une arête horizontale d'ordonnée Y(i) constituant le bord bas de la facette la plus prioritaire. Le début T1 de cette arête est situé avant l'arête a1 dans la liste L-act(Y(i)), ce qui correspond au fait que la facette masque l'arête a1 jusqu'au point I. Par conséquent, la valeur FA est attribuée à l'indicateur IND(I).

Dans le cas représenté sur la figure 15, l'arête la plus prioritaire, a2, est une arête horizontale, de même que l'arête a1, sur la ligne d'ordonnée Y(i). Le début S1 de l'arête a2 est placé après le début T1 de l'arête a1 dans la liste L-act(Y(i)). Les arêtes a1 et a2 ont la même fin, I, qui est considérée comme le point d'intersection de ces deux arêtes. Dans un tel cas, de même que dans le cas où a2 est un bord haut, le point I est considéré comme le point de fin d'activité de la facette la plus prioritaire.

Dans le cas représenté sur la figure 16, les arêtes a1 et a2 sont deux arêtes horizontales d'ordonnée Y(i), mais le début S1 de l'arête la plus prioritaire, a2, est situé avant le début T1 de l'autre arête, a1, dans la liste L-act(Y(i)). Dans cet exemple l'arête a2 constitue le bord bas de la facette la plus prioritaire. Les arêtes a1 et a2 ont une fin commune I, qui est considérée comme le point d'intersection de ces deux arêtes. Dans ce cas, de même que dans le cas où l'arête a2 constitue le bord haut de la facette la plus prioritaire, le point I constitue le point de fin d'activité de cette facette, par conséquent la valeur FA est attribuée à l'indicateur IND(I).

Dans le cas représenté sur la figure 17, deux facettes F1 et F2 ont une arête commune a2 qui coupe, au point I, une arête a1 appartenant à une troisième facette, moins prioritaire que F1 et F2. Une troisième valeur, notée DA-FA, est attribuée à l'indicateur IND(I). Elle traduit le fait que l'activité de masquage de F2 commence dès que l'activité de masquage de F1 se termine, ce qui provoque un masquage avant et après le point I.

La détermination du nombre n de facettes qui masquent le début de chaque arête, est réalisée successivement pour chaque intervalle [Y(i), Y(i+1)[, pris dans l'ordre des ordonnées décroissantes. Pour gagner du temps, elle peut être faite en parallèle avec la détermination des points d'intersection. Elle consiste à lire entièrement la liste L-act(Y(i)) des arêtes actives dans l'intervalle considéré, en distinguant, d'une part, les arêtes dont le début est situé sur la ligne courante, d'ordonnée Y(i) ; et, d'autre part, les autres arêtes de L-act(Y(i)). Ces autres arêtes appartiennent à des facettes qui sont susceptibles de masquer les débuts d'arête situés sur la ligne courante. Pour caractériser l'activité de masquage de ces facettes, sur ces débuts d'arêtes, deux moyens sont mis en oeuvre :

- une liste L-fac(Y(i)), indiquant les facettes susceptibles de masquer un début d'arête, est mise à jour au fur et à mesure d'un balayage horizontal consistant à lire successivement les arêtes de la liste L-act(Y(i)) ;
- un indicateur, actif(F), propre à chaque facette F active sur la ligne courante, permet de distinguer le cas particulier où la facette est, en fait, tangente, par son bord bas, à la ligne courante, et ne peut donc masquer que le tout début d'une arête :

  -- actif(F) = 1, si la facette est susceptible de masquer franchement la ligne courante, avant l'arête considérée, qui vient d'être lue dans la liste L-act(Y(i)) ;
  -- actif(F) = 0, si elle n'est pas susceptible de masquer la ligne courante, avant l'arête considérée ;
  -- actif(F) = 2, si elle est susceptible de masquer tangentiellement la ligne courante, c'est-à-dire si la facette F a un bord bas situé sur la ligne courante et si cette facette a été rencontrée précédemment au cours de la lecture de L-act(Y(i)).

L'indicateur permet d'établir la liste L-fac(Y(i)), puis celle-ci permet de déterminer le nombre n ; en comptant le nombre de facettes qui sont dans la liste L-fac(Y(i)) dans son état correspondant à l'arête commençant considérée, c'est-à-dire à l'instant où est lue cette arête commençante, dans la liste L-act(Y(i)). Seules sont prises en compte, dans n, les facettes ayant une priorité supérieure à celle de l'arête commençante considérée.

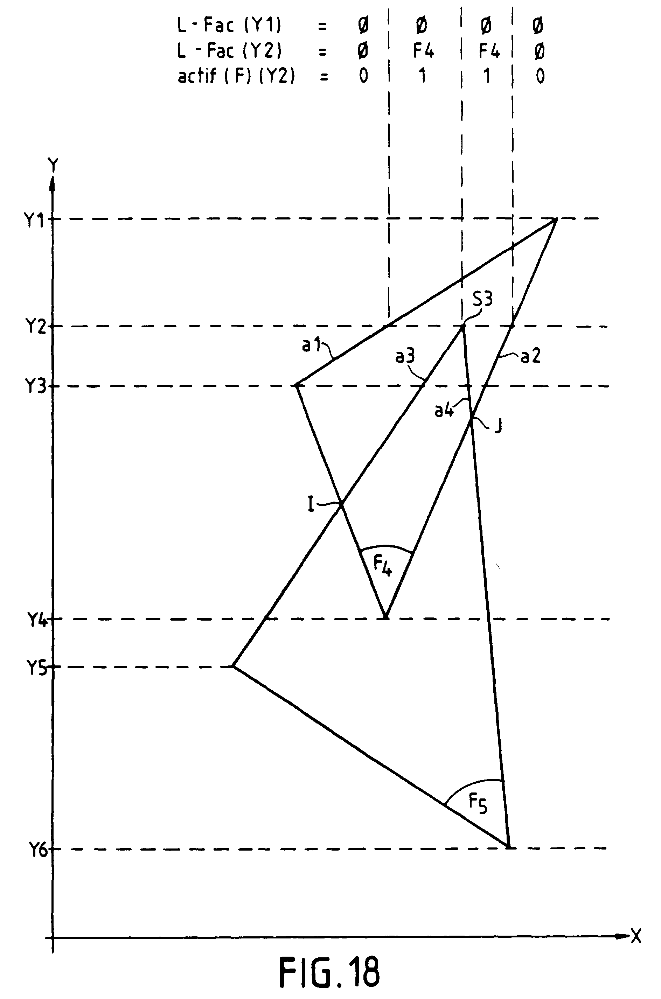

La figure 18 illustre, sur un exemple très simple, le principe de la détermination du nombre de facettes qui masquent le début d'une arête. Lorsque la ligne courante est la ligne d'ordonnée Y1, la liste des facettes actives L-fac(Y1) est vide car la ligne courante ne coupe alors aucune arête, la liste L-act(Y1) ne comportant que des arêtes commençantes : a1 et a2.

Lorsque la ligne courante est la ligne d'ordonnée Y2, la détermination de L-act(Y2) = a1, a3, a4, a2, permet de savoir que a3 et a4 sont des arêtes commençantes, alors que a1 et a2 ne font que traverser la ligne d'ordonnée Y2. Les arêtes de la liste L-act(Y(2)) sont considérées successivement pour mettre à jour la liste L-fac(Y2), pour déterminer l'indicateur actif(F) pour chaque facettes F rencontrée, et pour compter le nombre n de facettes masquant chaque début d'arête. La liste des facettes actives L-fac(Y2) est initialement vide, puis comporte la facette F4 à partir de la lecture de a1 dans L-act(Y(2)) car l'arête a1, appartenant à la facette F4, a un point de passage sur la ligne courante. Puis la facette F4 est effacée de la liste L-fact(Y(2)) après la lecture de a2 dans L-act(Y(2)) car a2 est une deuxième arête appartenant à la facette F4. Cette inscription temporaire de la facette F4 dans L-fac(Y2) correspond au fait que la facette F4 est susceptible de masquer des arêtes dans la zone des abscisses située entre le point de passage de l'arête a1 et le point de passage de l'arête a2 sur la ligne courante, d'ordonnée Y2.

Entre temps, les arêtes a3 et a4 ont été lues dans L-act(Y(2)) mais sans modifier L-fac(Y(2)) car a3 et a4 sont des arêtes commençantes. Au moment où a3 et a4 sont lues dans L-act(Y(2)), la liste des facettes actives L-fac(Y2) contient la facette F4, ce qui permet de conclure que le début S3 des facettes a3 et a4 est susceptible d'être masqué par la facette F4. Il reste ensuite à comparer la priorité de la facette F5 à laquelle appartiennent a3 et a4, avec la priorité de la facette F4, pour en déduire si la facette F4 doit être effectivement comptée dans le nombre n des facettes masquant le début S3 des arêtes a3 et a4.

Sur cet exemple très simple, il paraît évident que l'activité de masquage éventuel de la facette F4 commence lorsque la lecture de L-act(Y(2)) indique l'existence d'un point de passage de l'arête a1 sur la ligne courante, et que cette activité finit lorsque la lecture de L-act(Y(2)) indique l'existence d'un point de passage de l'arête a2 sur la ligne courante, sachant que la facette F4 comporte notamment les arêtes a1 et a2. En pratique, il y a des cas plus compliqués notamment à cause des arêtes horizontales.

Dans le cas général, où il y a en particulier des arêtes horizontales sur la ligne courante, la détermination du nombre n de facettes qui masquent la première extrémité de chaque arête, commençant sur la ligne d'ordonnée Y(i) consiste à :

- lire successivement les arêtes et les extrémités d'arêtes contenues dans la liste L-act(Y(i)) ;
- mettre à jour la liste L-fac(Y(i)), contenant les facettes susceptibles de masquer une arête de la liste L-act(Y(i)), la liste L-fac(Y(i)) étant vide au début de la lecture de L-act(Y(i)), une facette F étant inscrite dans L-fac(Y(i)) lorsqu'une première arête non-horizontale a1 appartenant à cette facette F est lue dans la liste L-act(Y(i)), ou bien lorsqu'une première extrémité d'une arête horizontale appartenant à cette facette F est lue dans la liste L-act(Y(i)) ; et cette même facette F étant ensuite enlevée de L-fac(Y(i)) lorsqu'une deuxième arête non-horizontale appartenant à cette facette F est lue dans L-act(Y(i)), ou bien lorsque la seconde extrémité d'une arête horizontale appartenant à cette facette F est lue dans L-act(Y(i)) ;
- comparer la priorité de chaque arête ayant sa première extrémité sur la ligne courante, avec la priorité de chaque facette F contenue dans L-fac(Y(i)) en l'état correspondant à l'arête considérée ; puis compter le nombre de facettes présentes dans L-fac(Y(i)) et ayant une priorité supérieure à celles de l'arête considérée. Ce nombre constitue le nombre n des facettes qui masquent la première extrémité de l'arête considérée.

La liste L-fac(Y(i)) est établie à partir de la liste L-act(Y(i)), en déterminant la position d'au moins une facette pour chacune des arêtes de L-act(Y(i)), prises successivement, à l'exception des arêtes commençant sur la ligne d'ordonnée Y(i). En effet chacune de ces arêtes appartient au contour d'au moins une facette, mais cette facette peut être située d'un côté ou de l'autre de cette arête. Certaines arêtes étant communes à deux facettes, il faut déterminer alors la position des deux facettes.

Cette position est traduite par l'indicateur, actif(F). Cet indicateur correspond à la position de la facette F par rapport à l'arête a considérée, à un instant donné. Sa valeur varie au fur et à mesure de la lecture des arêtes de la liste des arêtes actives sur la ligne courante. La valeur de l'indicateur et la liste L-fac qui en découle, sont déterminées selon l'algorithme suivant.

Pour chaque arête a, non commençante sur la ligne courante, la lecture de la liste des facettes possédant cette arête, indique au moins une arête : F.

Si la facette F est déjà active, c'est-à-dire si la valeur de l'indicateur actif(F) est déjà égale à 1, par exemple parce qu'une arête a1 de la facette a été trouvée précédemment dans la liste des arêtes actives sur la ligne courante, deux cas sont à distinguer :

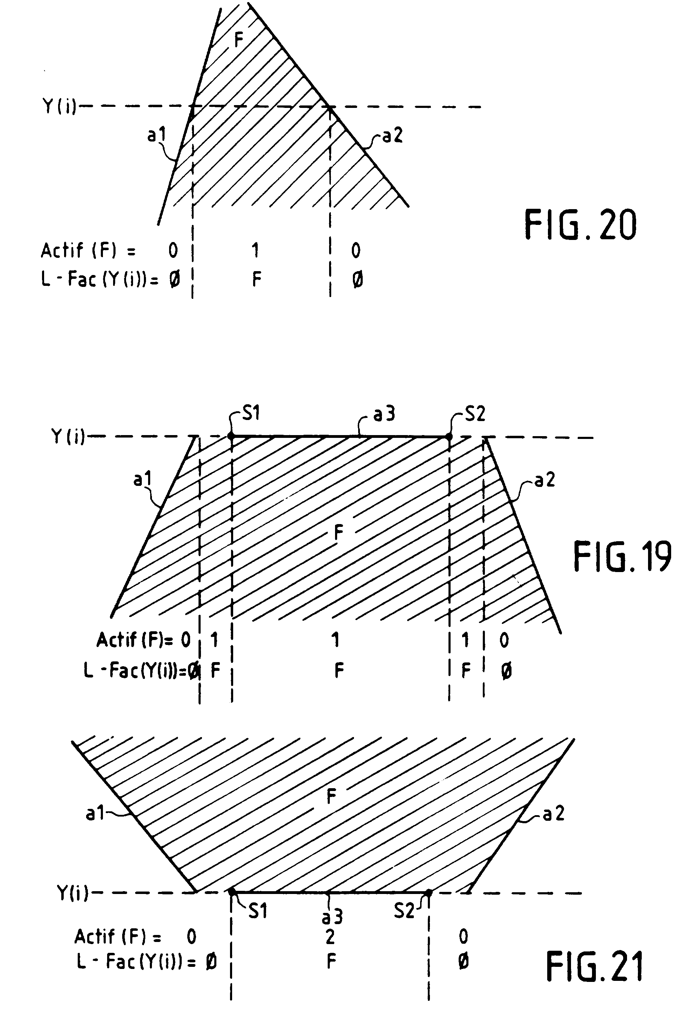

- si a est une arête horizontale, représentée par son début S1 ou par sa fin S2, alors l'arête a est un bord haut. La valeur de l'indicateur est maintenue à 1 et la facette F est maintenue dans la liste des facettes actives. Ce cas est celui de l'arête a3 représentée sur la figure 19.
- si l'arête a n'est pas horizontale, alors c'est un bord droit. La facette F n'est plus active, il faut donner la valeur 0 à l'indicateur et enlever F de la liste des facettes actives. Ce cas est celui de l'arête a2 sur la partie droite de la figure 19 et sur la partie droite de la figure 20.

Si la facette F n'est pas déjà active, c'est-à-dire si la valeur de son indicateur est égale à 0, deux cas sont à distinguer :

- si l'arête a n'est pas horizontale, elle est forcément du type bord gauche. La facette F devient active. Il faut donner la valeur 1 à l'indicateur et insérer F dans la liste des facettes actives. Ce cas est celui de l'arête a1 sur les figures 19 et 20. Sur la figure 19 un espace a été représenté entre le début de l'arête a1 et le début S1 de l'arête horizontale a3, parce que la liste des arêtes actives mentionne séparément l'arête a1, puis le début S1, et qu'ils correspondent chacun à deux étapes successives de la détermination de l'indicateur et de la liste des facettes actives. Naturellement, cette discontinuité n'existe pas dans la réalité du tracé des arêtes.
- si l'arête a est horizontale, il faut distinguer deux cas selon que la facette n'est pas active, avec un indicateur égal à 0, ou bien est active avec un indicateur égal à 2, ce qui se produit lorsqu'un bord bas a été rencontré.

-- actif(F) = 0, F n'est pas active, l'arête a est forcément le début d'une arête horizontale du type bord bas. Il faut donner la valeur 2 à l'indicateur, pour indiquer qu'il y a une facette F active, et indiquer qu'elle est dans une situation particulière puisque c'est seulement son bord bas qui est susceptible de masquer une autre arête. Il faut aussi insérer la facette F dans la liste des facettes actives sur la ligne courante. C'est le cas de l'arête a3 dans l'exemple représenté sur la figure 21, dans sa partie gauche. Comme sur la figure 19, un espace a été représenté sur la figure 21 entre la fin de l'arête a1 et le début S1 de l'arête a3, et un espace a été représenté entre la fin S2 de l'arête a3 et la fin de l'arête a2 constituant le bord droit de la facette F, mais cet espace n'existe pas sur le tracé réel des facettes.

-- si actif(F) = 2, la facette F est active, mais dans le cas particulier d'un bord bas. L'arête a est en fait la fin S2 d'une arête horizontale. C'est le cas de l'arête a3 dans l'exemple de la figure 21. La facette F devient inactive au-delà du point S2, il faut donc donner la valeur 0 à l'indicateur et enlever F de la liste des facettes actives.

Le procédé selon l'invention peut être mis en oeuvre, en temps réel, au moyen d'un microprocesseur à usage général, par exemple du type 68020 commercialisé par MOTOROLA, couplé à une mémoire de programme et à un coprocesseur de calcul à virgule flottante. La rédaction du programme de mise en oeuvre est à la portée de l'Homme de l'Art, à partir de la description du procédé selon l'invention.

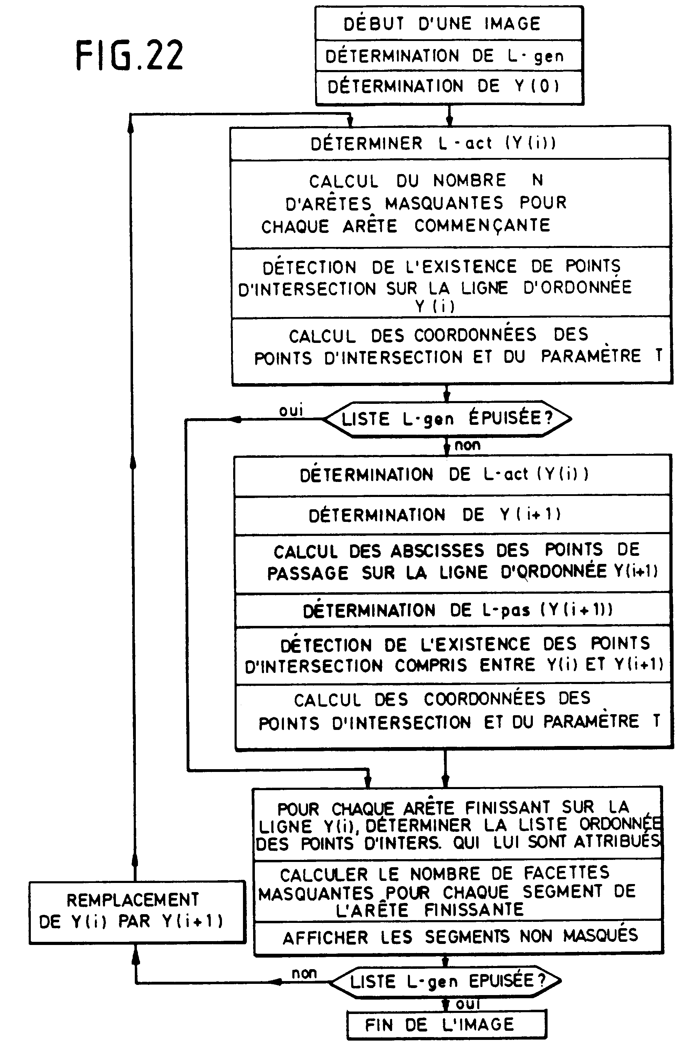

La figure 22 représente l'organigramme d'un programme pour la mise en oeuvre du procédé selon l'invention, au moyen d'un microprocesseur à usage général. Cet organigramme récapitule les nombreuses opérations décrites précédemment, en montrant leur enchaînement pour traiter une image. Les arêtes de l'image ont été préalablement déterminées au moyen d'un procédé et d'un dispositif de type connu. Chaque arête est représentée par les coordonnées de ces deux extrémités et par sa pente. Le programme commande l'établissement de la liste L-gen de toutes ces arêtes, ordonnées selon la première relation d'ordre, par une technique de tris connue, par exemple un tri par bulle.

Le programme commande ensuite la détermination de Y(0) qui est constituée par l'ordonnée du début de la première arête inscrite dans la liste L-gen. Le programme commande ensuite l'établissement de la liste L-act(Y(i)). Dans le cas général, l'établissement L-act(Y(i)) consiste à ajouter à la liste L-pas(Y(i-1)), des arêtes prises dans la liste L-gen, qui n'ont pas été inscrites précédemment dans la liste L-act et dont le début a pour ordonnée Y(i) ; et à enlever de la liste L-pas(Y(i)), les arêtes de cette liste dont la fin a pour ordonnée Y(i).

Dans le cas particulier de i=0, l'établissement de cette liste est plus simple que dans le cas général, mais la séquence des opérations est la même.

Le programme commande alors le calcul du nombre n de facettes masquantes pour chacune des arêtes commençant sur la ligne d'ordonnée Y(i), c'est-à-dire les arêtes ajoutées à la liste. Il commande aussi la détection de l'existence des points d'intersection situés sur la ligne Y(i). Puis il commande le calcul du paramètre T, puis le calcul de coordonnées de chaque point d'intersection qui a été détecté.

Puis il commande la détermination de la liste L-act'(Y(i)), à condition que la liste L-gen ne soit pas épuisée. La liste L-act'(Y(i)) comporte les arêtes de la liste L-act(Y(i)), moins les arêtes horizontales. Puis il commande la détermination de Y(i+1), en recherchant la plus grande valeur d'ordonnée parmi les valeurs d'ordonnées des fins des arêtes inscrites dans L-act'(Y(i)), et la valeur d'ordonnée du début de la première arête disponible dans L-gen. Puis il commande la détermination des coordonnées des points de passage des arêtes de la liste L-act'(Y(i)), sur la ligne d'ordonnée Y(i+1). Puis il commande l'établissement de la liste L-pas(Y(i+1)), ordonnée en fonction des abscisses des points de passage déterminés précédemment. Puis il commande la détection de l'existence des points d'intersection ayant une ordonnée comprise entre Y(i) et Y(i+1).Puis il commande le calcul du paramètre T et des coordonnées de ces points d'intersection.

Puis le programme commande, pour chaque arête finissant sur la ligne d'ordonnée Y(i+1), la détermination d'une liste ordonnée des points d'intersection attribués à cette arête. L'ordre est celui des valeurs T décroissantes, cette valeur étant calculée pour chaque point d'intersection selon la formule (6), chaque point d'intersection étant attribué à l'arête la moins prioritaire parmi les deux arêtes possédant ce point d'intersection. Cette opération est réalisée aussi lorsqu'il a été détecté que la liste L-gen est épuisée, c'est-à-dire après la détermination des points d'intersection sur les arêtes horizontales les plus basses de l'image.

Puis le programme commande le calcul du nombre n de facettes masquantes pour chaque segment de l'arête considérée. Enfin le programme commande l'affichage des segments non masqués, en fournissant les coordonnées de leurs extrémités, au dispositif d'affichage. Si la liste L-gen n'est pas épuisée, le programme commande le remplacement de Y(i) par Y(i+1), puis commande de nouveau les opérations précédentes, à partir de la détermination de la liste L-act(Y(i)). Lorsque la liste L-gen est épuisée, le traitement de l'image courante est terminé.

L'invention ne se limite pas aux exemples de mise en oeuvre décrits précédemment. De nombreuses variantes sont possibles, notamment dans l'organisation des calculs.

Une variante de la détermination des segments qui sont visibles et de ceux qui sont cachés, peut consister à parcourir tout le contour d'une facette à partir de la première extrémité de l'une des arêtes, en enchaînant sucessivement toutes les arêtes du contour, en déterminant le nombre n de facettes masquant la première extrémité, uniquement pour la première extrémité de la première arête. Les calculs sont alors un peu simplifiés, puisque le nombre de facettes masquantes n'est pas déterminé pour la première extrémité des autres arêtes du contour. Dans ce cas, il est nécessaire de disposer, pour chaque facette, d'une liste ordonnée des arêtes constituant le contour de cette facette. Par contre, cette variante a pour inconvénient qu'une erreur sur la détermination des segments visibles d'une arête peut se répercuter sur les autres arêtes constituant le contour.

L'enchaînement de calculs pour déterminer tous les segments visibles du contour d'une même facette, a aussi pour avantage de permettre l'enchaînement de l'allumage de ces segments. Ceci permet de gagner du temps en évitant des temps morts pour dévier le faisceau électronique du tube cathodique pour balayer des arêtes éloignées car n'appartenant pas aux mêmes contours.

Il est possible aussi de mettre en oeuvre le procédé selon l'invention au moyen d'un autre type de matériel, plus spécialisé : des circuits intégrés spécialisés pour la résolution d'équations du premier degré, et des circuits intégrés spécialisés pour des tris rapides.

Pour alléger les calculs dus aux traitements des arêtes horizontales, une variante du procédé consiste à déplacer légèrement les points critiques de l'image de façon à supprimer les arêtes horizontales. Ce déplacement doit évidemment tenir compte de la définition de l'écran d'affichage et de la précision souhaitée pour l'image affichée.

Une autre variante du procédé consiste à définir une activité de masquage extérieure à certaines facettes, en plus de l'activité de masquage intérieure décrite précédemment. Elle consiste à masquer les arêtes situées à l'extérieur de la facette considérée, cette facette constituant une fenêtre. Un paramètre supplémentaire, distinguant l'activité intérieure et l'activité extérieure, permet alors de réaliser un fenêtrage, c'est-à-dire permet d'éliminer les arêtes situées hors d'un certain champ. Ceci permet, par exemple, de dessiner des trous dans une facette d'un objet.

Le procédé est applicable notamment à la synthèse d'un symbole à 3 dimensions sur un affichage de tableau de bord d'un avion.

**Revendications**

1. Procédé d'élimination des faces cachées pour la synthèse d'une image filaire tridimensionnelle celle-ci étant constituée de facettes, chaque facette étant constituée par des arêtes représentées chacune par les coordonnées de ses extrémités et par la valeur de sa pente, dans un repère cartésien constitué de deux axes de coordonnées (ox, oy), chaque point d'une arête étant muni d'un paramètre de priorité permettant de restituer les apparences d'une troisième dimension, sur un afficheur à deux dimensions, caractérisé en ce qu'il consiste à :

   - déterminer les points d'intersection (I1,I2,I3) de toutes les arêtes entre elles, en :

       -- découpant l'ensemble des valeurs d'ordonnées en intervalles [Y(i),Y(i+1)[ tels que chaque borne est la valeur d'ordonnée d'une extrémité d'arête et tels qu'aucune ordonnée d'extrémité d'arête n'est comprise dans ces intervalles ;
       -- déterminant, pour chaque intervalle [Y(i),Y(i+1)[, les coordonnées des points d'intersection des arêtes dont les ordonnées sont comprises dans cet intervalle ;
       -- constituant, pour chaque arête, une liste des points d'intersection de cette arête avec les autres arêtes plus prioritaires, cette liste étant ordonnée selon la position des points d'intersection entre une première et une seconde extrémité de l'arête ;

   - déterminer pour chaque point d'intersection, la valeur d'un indicateur indiquant si la facette de l'arête la plus prioritaire masque l'arête la moins prioritaire, à partir du point d'intersection considéré ; ou la masque avant le point d'intersection considéré ; ou bien la masque avant et après le point d'intersection, chaque arête étant parcourue d'une première à une seconde extrémité ;
   - déterminer, pour la première extrémité (A) de chaque arête, le nombre (n) de facettes qui masquent cette première extrémité ;
   - déterminer, pour chaque arête (AB) les segments de cette arête qui sont visibles et ceux qui sont cachés, en déterminant le nombre (n) de facettes qui masquent chaque segment, à partir du nombre des facettes qui masquent la première extrémité (A) de l'arête, et à partir des valeurs des indicateurs pour les points d'intersection (I1, ..., I4) de cette arête (AB) avec des arêtes plus prioritaires.

2. Procédé selon la revendication 1, caractérisé en ce que, pour déterminer, pour chaque intervalle [Y(i),Y(i+1)[, les coordonnées des points d'intersection, il consiste à :

   - déterminer une première liste (L-act(Y(i))) constituée par les arêtes, dites non-horizontales, ayant un point unique, dit point de passage, sur la ligne d'ordonnée Y(i), et constituée par les premières et les secondes extrémités d'arêtes dites horizontales, dont les points sont tous situés sur la ligne d'ordonnée (Y(i)), cette liste étant ordonnée en fonction des abscisses des points de passage des arêtes non-horizontales, et accessoirement en fonction de leur pente, et étant ordonnée en fonction des abscisses des extrémités des arêtes horizontales ;
   - déduire de cette première liste l'existence de points d'intersection situés sur la ligne d'ordonnée Y(i) ;
   - déterminer les abscisses des points de passage des arêtes non-horizontales de la première liste, sur la ligne d'ordonnée Y(i+1) ;
   - déterminer une deuxième liste (L-pas(Y(i+1))) constituée par toutes les arêtes non-horizontales de la première liste, et ordonnée en fonction des abscisses de leurs points de passage sur la ligne d'ordonnée Y(i+1) ;
   - comparer l'ordre de la première liste (L-act(Y(i))) et celui de la deuxième liste (L-pas(Y(i+1))), et en déduire l'existence de points d'intersection situés entre les lignes d'ordonnées Y(i) et Y(i+1) ;
   - calculer les coordonnées d'un point d'intersection pour chaque couple d'arêtes pour lequel une intersection a été détectée.

3. Procédé selon la revendication 2, caractérisé en ce que, pour déduire de la première liste (L-act(Y(i))) l'existence de points d'intersection entre arêtes non-horizontales et arêtes horizontales, il consiste à :

   - lire entièrement la première liste (L-act(Y(i))) en mettant à jour une troisième liste qui est vide au début de la lecture de la première liste, et dans laquelle chaque arête horizontale est inscrite lorsqu'une première extrémité de cette arête est lue dans la première liste, et dans laquelle cette arête horizontale est effacée lorsqu'une seconde extrémité est lue dans la première liste ;
   - conclure qu'il existe une intersection, chaque fois qu'une arête non-horizontale est lue dans la première liste (L-act(Yi))) alors qu'une arête horizontale est présente sur la troisième liste.

**4.** Procédé selon la revendication 2, caractérisé en ce que pour déterminer rapidement la première liste d'arêtes (L-act(Y(i)), pour chaque intervalle [Y(i),Y(i+1)[, il consiste à :

- constituer une liste de toutes les arêtes de l'image, en ordonnant les arêtes non-horizontales, selon les valeurs décroissantes des ordonnées de leurs premières extrémités, la première extrémité étant définie comme celle ayant la plus grande ordonnée, et accessoirement selon leurs pentes, lorsque plusieurs arêtes non-horizontales ont des premières extrémités ayant la même ordonnée ; et en ordonnant les arêtes horizontales selon leurs ordonnées, et accessoirement selon les abscisses de leurs premières extrémités, lorsque plusieurs arêtes horizontales ont la même ordonnée ;
- déterminer la première liste (L-act(Y(i))) successivement pour chaque intervalle [Y(i),Y(i+1)[, en considérant les intervalles dans l'ordre des ordonnées Y(i) décroissantes, à partir de la deuxième liste (L-pas(Y(i-1))) déterminée pour l'intervalle [Y(i-1),Y(i)[ considéré immédiatement avant l'intervalle [Y(i),Y(i+1)[, en ajoutant à cette deuxième liste les arêtes qui ont une première extrémité d'ordonnée égale à Y(i), et en y enlevant les arêtes horizontales et les arêtes qui ont une seconde extrémité ayant une ordonnée égale à Y(i).

**5.** Procédé selon la revendication 2, caractérisé en ce que la valeur d'un indicateur pour chaque point d'intersection, est déterminée en fonction :

- de l'ordre des deux arêtes (a1, a2) possédant l'intersection, dans la première liste (L-act(Yi)) correspondant à l'intervalle [Y(i),Y(i+1)[ où est trouvé le point d'intersection considéré ;
- et de la position de la facette la plus prioritaire par rapport à l'arête (a2) qui fait partie de cette facette et qui possède le point d'intersection considéré.

**6.** Procédé selon la revendication 2, caractérisé en ce que, pour déterminer le nombre de facettes qui masquent la première extrémité de chaque arête, successivement dans chaque intervalle [Y(i), Y(i+1)[, pris dans l'ordre des ordonnées décroissantes, il consiste à :

- lire successivement les arêtes et les extrémités d'arêtes contenues dans la première liste (L-act(Y(i))) constituée pour la ligne courante correspondant à cet intervalle ;
- mettre à jour une quatrième liste (L-fac(Y(i))), contenant les facettes susceptibles de masquer une arête de la première liste, la quatrième liste étant vide au début de la lecture de la première liste, une facette (F) étant inscrite dans la quatrième liste lorsqu'une première arête non-horizontale (a1) appartenant à cette facette (F) est lue dans la première liste ou bien lorsqu'une première extrémité (S1) d'une arête horizontale (a3) appartenant à cette facette (F) est lue dans la première liste ; et cette même facette (F) étant ensuite enlevée de la quatrième liste lorsqu'une deuxième arête non-horizontale (a2) appartenant à cette facette (F) est lue dans la première liste, ou bien lorsque la seconde extrémité (S2) d'une arête horizontale (a3) appartenant à cette facette (F) est lue dans la première liste ;
- comparer la priorité de chaque arête ayant sa première extrémité sur la ligne courante, avec la priorité de chaque facette (F) contenue dans la quatrième liste dans son état correspondant à l'arête considérée c'est-à-dire à l'instant où cette arête est lue dans la liste ; puis compter le nombre de facettes (F) présentes sur la quatrième liste et ayant une priorité supérieure à celle de l'arête considérée.

**7.** Procédé selon la revendication 1, caractérisé en ce que, pour ordonner rapidement la liste des points d'intersection d'une arête entre la première et la seconde extrémité, il consiste à :

- calculer, pour chaque point d'intersection, la valeur d'un paramètre (T(I)) qui est proportionnel à la distance entre le point d'intersection et la seconde extrémité de l'arête, en fonction des coordonnées des deux extrémités des arêtes possédant l'intersection, et en fonction de leurs pentes ;
- déterminer l'ordre des intersections en comparant la valeur de ce paramètre (T(I))pour tous les points d'intersection de l'arête ;

et en ce qu'il consiste à calculer l'ordonnée et l'abscisse de chaque point d'intersection à partir de la valeur du paramètre (T(I)) calculée pour cette intersection.

**Patentansprüche**

**1.** Verfahren zum Entfernen von verdeckten Flächen für die Synthese eines dreidimensionalen Linienbildes, das aus Facetten gebildet ist, wobei jede Facette durch Kanten gebildet ist, die jeweils durch die Koordinaten ihrer Endpunkte und durch den Wert ihrer Steigung in einem kartesischen Koordinatensystem, das durch zwei Koordinatenachsen (ox, oy) gebildet ist, repräsentiert werden, wobei jeder Punkt einer Kante mit einem Prioritätsparameter versehen ist, der die Wiedergabe des Eindrucks einer dritten Dimension auf einer zweidimensionalen Anzeige ermöglicht, dadurch gekennzeichnet, daß es darin besteht:

- die Schnittpunkte (I1, I2, I3) sämtlicher Kanten untereinander zu bestimmen, indem:

  -- alle Ordinatenwerte in Intervalle [Y(i),Y(i+1)[ in der Weise unterteilt werden, daß jede Grenze der Ordinatenwert eines Kantenendes ist und daß in diesen Intervallen keine Ordinate eines Kantenendes enthalten ist;
  -- für jedes Intervall [Y(i),Y(i+1)[ die Koordinaten der Schnittpunkte der Kanten bestimmt werden, deren Ordinaten in diesem Intervall enthalten sind;
  -- für jede Kante eine Liste von Schnittpunkten dieser Kante mit den anderen Kanten mit höherer Priorität erstellt wird, wobei diese Liste entsprechend der Position der Schnittpunkte zwischen einem ersten und einem zweiten Ende der Kante geordnet wird;

- für jeden Schnittpunkt den Wert eines Anzeigers zu bestimmen, der angibt, ob die Facette der Kante mit höchster Priorität die Kante mit niedrigster Priorität am betrachteten Schnittpunkt verdeckt; oder sie vor dem betrachteten Schnittpunkt verdeckt; oder aber sie vor und hinter dem Schnittpunkt abdeckt, wobei jede Kante von einem ersten zu einem zweiten Ende durchlaufen wird;
- für das erste Ende (A) jeder Kante die Anzahl (n) von Facetten zu bestimmen, die dieses erste Ende abdecken;
- für jede Kante (AB) die Segmente dieser Kante, die sichtbar sind, und diejenigen, die verdeckt sind, zu bestimmen, indem die Anzahl (n) von Facetten, die jedes Segment abdecken, anhand der Anzahl der Facetten, die das erste Ende (A) der Kante abdecken, und anhand der Werte der Anzeiger für die Schnittpunkte (I1, ..., I4) dieser Kante (AB) mit den Kanten mit höherer Priorität bestimmt wird.

2. Verfahren nach Anspruch 1, dadurch gekennzeichnet, daß es für die Bestimmung der Koordinaten der Schnittpunkte für jedes Intervall [Y(i),Y(i+1)[ darin besteht:

- eine erste Liste (L-act(Y(i))) zu bestimmen, die durch die sogenannten nicht horizontalen Kanten mit einem einzigen sogenannten Durchgangspunkt auf der Ordinatenlinie Y(i) und durch die ersten und zweiten Enden von sogenannten horizontalen Kanten gebildet ist, deren Punkte sich alle auf der Ordinatenlinie (Y(i)) befinden, wobei diese Liste in Abhängigkeit von den Abszissenwerten der Durchgangspunkte der nicht horizontalen Kanten und zusätzlich in Abhängigkeit von ihrer Steigung geordnet ist sowie in Abhängigkeit von den Abszissen der Enden der horizontalen Kanten geordnet ist;
- aus dieser ersten Liste die Existenz von Schnittpunkten abzuleiten, die sich auf der Ordinatenlinie Y(i) befinden;
- die Abszissen der Durchgangspunkte der nicht horizontalen Kanten der ersten Liste auf der Ordinatenlinie Y(i+1) zu bestimmen;
- eine zweite Liste (L-pas(Y(i+1))) zu bestimmen, die durch sämtliche nicht horizontalen Kanten der ersten Liste gebildet ist und in Abhängigkeit von den Abszissen ihrer Durchgangspunkte auf der Ordinatenlinie Y(i+1) geordnet ist;
- die Reihenfolge der ersten Liste (L-act(Y(i))) und diejenige der zweiten Liste (L-pas(Y(i+1))) zu vergleichen und daraus die Existenz von Schnittpunkten abzuleiten, die sich zwischen den Ordinatenlinien Y(i) und Y(i+1) befinden;
- die Koordinaten eines Schnittpunkts für jedes Paar von Kanten zu berechnen, für das ein Schnittpunkt erfaßt worden ist.

3. Verfahren nach Anspruch 2, dadurch gekennzeichnet, daß es für die Ableitung der Existenz von Schnittpunkten zwischen nicht horizontalen Kanten und horizontalen Kanten aus der ersten Liste (L-act(Y(i))) darin besteht:

- die erste Liste (L-act(Y(i))) vollständig zu lesen, indem eine dritte Liste aktualisiert wird, die am Beginn des Lesens der ersten Liste leer ist und in die jede horizontale Kante geschrieben wird, wenn ein erstes Ende dieser Kante in der ersten Liste gelesen wird, und in der diese horizontale Kante gelöscht wird, wenn in der ersten Liste ein zweites Ende gelesen wird;
- jedesmal, wenn in der ersten Liste (L-act(Y(i))) eine nicht horizontale Kante gelesen wird, während in der dritten Liste eine horizontale Kante vorhanden ist, zu schließen, daß ein Schnittpunkt vorhanden ist.

4. Verfahren nach Anspruch 2, dadurch gekennzeichnet, daß es für die schnelle Bestimmung der ersten Liste von Kanten (L-act(Y(i))) für jedes Intervall [Y(i),Y(i+1)[ darin besteht:

- eine Liste für sämtliche Kanten des Bildes zu erstellen, indem die nicht horizontalen Kanten gemäß abnehmender Werte der Ordinaten ihrer ersten Enden, wobei das erste Ende als dasjenige definiert ist, das die größte Ordinate besitzt, und weiterhin gemäß ihrer Steigungen geordnet werden, wenn die ersten Enden mehrerer nicht horizontaler Kanten die gleiche Ordinate besitzen; und indem die horizontalen Kanten gemäß ihren Ordinaten und weiterhin gemäß den Abszissen ihrer ersten Enden geordnet werden, wenn mehrere horizontale Kanten die gleiche Ordinate besitzen;
- die erste Liste (L-act(Y(i))) nacheinander für jedes Intervall [Y(i),Y(i+1)[ zu bestimmen, indem die Intervalle in der Reihenfolge abnehmender Ordinaten Y(i) anhand der zweiten Liste (L-pas(Y(i-1))) betrachtet werden, welche für das Intervall [Y(i-1),Y(i)[, das unmittelbar vor dem Intervall [Y(i),y(i+1)[betrachtet worden ist, bestimmt worden ist, indem zu dieser zweiten Liste die Kanten hinzugefügt werden, die ein erstes Ende mit der Ordinate, die gleich Y(i) ist, besitzen, und indem hiervon die horizontalen Kanten und diejenigen Kanten entfernt werden, die ein zweites Ende mit einer Ordinate, die gleich Y(i) ist, besitzen.

5. Verfahren nach Anspruch 2, dadurch gekennzeichnet, daß der Wert eines Anzeigers für jeden Schnittpunkt bestimmt wird in Abhängigkeit von:

- der Reihenfolge der zwei Kanten (a1, a2), die in der ersten Liste (L-act(Y(i))), die dem Intervall [Y(i),Y(i+1)[ entspricht, wo sich der betrachtete Schnittpunkt befindet, einen Schnittpunkt besitzen;
- der Position der Facette mit höchster Priorität in bezug auf die Kante (a2), die einen Teil dieser Facette bildet und die den betrachteten Schnittpunkt enthält.

6. Verfahren nach Anspruch 2, dadurch gekennzeichnet, daß es für die Bestimmung der Anzahl von Facetten, die das erste Ende jeder Kante verdecken, nacheinander in jedem Intervall [Y(i),Y(i+1)[ in der Reihenfolge abnehmender Ordinaten darin besteht:

- nacheinander die Kanten und die Enden der Kanten, die in der ersten Liste (L-act(Y(i))) enthalten sind, welche für die diesem Intervall entsprechende aktuelle Linie gebildet ist, zu lesen;
- eine vierte Liste (L-fac(Y(i))) zu aktualisieren, die die Facetten enthält, die eine Kante der ersten Liste verdecken können, wobei die vierte Liste bei Beginn des Lesens der ersten Liste leer ist, wobei eine Facette (F) in die vierte Liste geschrieben wird, wenn eine erste nicht horizontale Kante (a1), die zu dieser Facette (F) gehört, in der ersten Liste gelesen wird, oder aber wenn ein erstes Ende (S1) einer horizontalen Kante (a3), die zu dieser Facette (F) gehört, in der ersten Liste gelesen wird; und wobei dieselbe Facette (F) anschließend aus der vierten Liste beseitigt wird, wenn eine zweite nicht horizontale Kante (a2), die zu dieser Facette (F) gehört, in der ersten Liste gelesen wird, oder aber wenn das zweite Ende (S2) einer horizontalen Kante (a3), die zu dieser Facette (F) gehört, in der ersten Liste gelesen wird;
- die Priorität jeder Kante, deren erstes Ende auf der aktuellen Linie liegt, mit der Priorität jeder Facette (F) zu vergleichen, die in der vierten Liste enthalten ist, wenn diese sich in dem der betrachteten Kante entsprechenden Zustand befindet, d. h. im Zeitpunkt, in dem diese Kante in der Liste gelesen wird; anschließend die Anzahl von Facetten (F), die in der vierten Liste vorhanden sind und eine Priorität besitzen, die größer als diejenige der betrachteten Kante ist, zu zählen.

7. Verfahren nach Anspruch 1, dadurch gekennzeichnet, daß es zum schnellen Ordnen der Liste von Schnittpunkten einer Kante zwischen dem ersten und dem zweiten Ende darin besteht:

- für jeden Schnittpunkt den Wert eines Parameters (T(I)), der zum Abstand zwischen dem Schnittpunkt und dem zweiten Ende der Kante proportional ist, in Abhängigkeit von den Koordinaten der zwei Enden der den Schnittpunkt besitzenden Kanten sowie in Abhängigkeit ihrer Steigungen zu berechnen;
- die Reihenfolge der Schnittpunkte zu bestimmen, indem der Wert dieses Parameters (T(I)) für alle Schnittpunkte der Kante verglichen wird;

und dadurch, daß es darin besteht, die Ordinate und die Abszisse jedes Schnittpunkts anhand des Wertes des Parameters (T(I)), der für diesen Schnittpunkt berechnet worden ist, zu berechnen.

**Claims**

1. Method of eliminating hidden faces for synthesis of a three-dimensional wire image, the latter consisting of facets, each facet consisting of edges each represented by the coordinates of its ends and by the value of its slope, in a Cartesian coordinate system consisting of two coordinate axes (ox, oy), each point of an edge being provided with a priority parameter making it possible to restore the appearances of a third dimension, on a two-dimensional display, characterized in that it consists in:

   - determining the points of intersection (I1, I2, I3) of all the edges with each other, by:

      -- cutting the set of ordinate values into intervals [Y(i), Y(i+1)[such that each bound is the ordinate value of an edge end and such that no edge end ordinate lies within these intervals;
      -- determining, for each interval [Y(i),Y(i+1)[, the coordinates of the points of intersection of the edges whose ordinates lie within this interval;
      -- compiling, for each edge, a list of the points of intersection of this edge with the other edges of higher priority, this list being ordered according to the position of the points of intersection between a first and a second end of the edge;

   - determining, for each point of intersection, the value of an indicator indicating whether the facet of the highest priority edge masks the lowest priority edge, from the point of intersection in question; or masks it before the point of intersection in question; or else masks it before and after the point of intersection, each edge being traversed from a first to a second end;
   - determining for the first end (A) of each edge, the number (n) of facets which mask this first end;
   - determining, for each edge (AB), the segments of this edge which are visible and those which are hidden, by determining the number (n) of facets which mask each segment, based on the number of facets which mask the first end (A) of the edge, and based on the values of the indicators for the points of intersection (I1...,I4) of this edge (AB) with higher priority edges.

2. Method according to Claim 1, characterized in that in order to determine, for each interval [Y(i), Y(i+1) [, the coordinates of the points of intersection, it consists in:

   - determining a first list (L-act(Y(i))) consisting of the edges, called non-horizontal edges, having a single point, called a passage point, on the ordinate line Y(i), and consisting of the first and the second ends of edges, called horizontal edges, whose points are all located on the ordinate line (Y(i)), this list being ordered on the basis of the abscissae of the points of passage of the non-horizontal edges, and secondarily on the basis of their slope, and being ordered on the basis of the abscissae of the ends of the horizontal edges;
   - deducing from this first list the existence of points of intersection located on the ordinate line Y(i) ;
   - determining the abscissae of the points of passage of the non-horizontal edges of the first line on the ordinate line Y(i+1);
   - determining a second list (L-pas(Y(i+1))) consisting of all the non-horizontal edges of the first list, and ordered on the basis of the abscissae of their points of passage on the ordinate line Y(i+1);
   - comparing the order of the first list (L-act(Y(i))) and that of the second list (L-pas(Y(i+1))), and deducing from this the existence of points of intersection located between the ordinate lines Y(i) and Y(i+1);
   - calculating the coordinates of a point of intersection for each pair of edges for which an intersection has been detected.

3. Method according to Claim 2, characterized in that in order to deduce from the first list (L-act(Y(i))) the existence of points of intersection between non-horizontal edges and horizontal edges, it consists in:

   - reading all of the first list (L-act(Y(i))), updating a third list which is blank at the beginning of the reading of the first list, and in which each horizontal edge is entered when a first end of this edge is read in the first list, and in which this horizontal edge is erased when a second end is read in the first list;
   - concluding that there is an intersection, each time that a non-horizontal edge is read in the first list (L-act(Yi))) when a horizontal edge is present in the third list.

4. Method according to Claim 2, characterized in that, in order quickly to determine the first list of edges (L-act(Y(i)), for each interval [Y(i),Y(i+1)[, it consists in:

- compiling a list of all the edges of the image, by ordering the non-horizontal edges according to the decreasing values of the ordinates of their first ends, the first end being defined as the one having the greatest ordinate, and secondarily according to their slopes, when several non-horizontal edges have first ends having the same ordinate, and by ordering the horizontal edges according to their ordinates, and secondarily according to the absissae of their first ends, when several horizontal edges have the same ordinate;
- determining the first list (L-act(Y(i))) successively for each interval [Y(i),Y(i+1)[, by considering the intervals in the order of decreasing ordinates Y(i), starting from the second list (L-pas(Y-i-1))) determined for the interval [Y(i-1),Y(i)[ in question, just before the interval [Y(i), Y(i+1)[, by adding to this second list the edges which has a first end with ordinate equal to Y(i), and removing from it the horizontal edges and edges that have a second end having an ordinate equal to Y(i).

5. Method according to Claim 2, characterized in that the value of an indicator for each point of intersection is determined as a function of:

- the order of the two edges (a1, a2) having the intersection, in the first list (L-act(Y(i)) corresponding to the interval [Y(i),Y(i+1)[ where the point of intersection in question is found;
- and the position of the highest priority facet relative to the edge (a2) which is part of this facet and which has the point of intersection in question.

6. Method according to Claim 2, characterized in that, in order to determine the number of facets which mask the first end of each edge, successively in each interval [Y(i), Y(i+1)[, taken in the order of decreasing ordinates, it consists in:

- successively reading the edges and the ends of edges contained in the first list (L-act(y(i))) compiled for the current line corresponding to this interval;
- updating a fourth list (L-fac(Y(i))) containing the facets able to mask an edge of the first list, the fourth list being blank at the beginning of the reading of the first list, a facet (F) being entered in the fourth list when a first non-horizontal edge (a1) belonging to this facet (F) is read in the first list or else when a first end (S1) of a horizontal edge (a3) belonging to this facet (F) is read in the first list; and this same facet (F) then being removed from the fourth list when a second non-horizontal edge (a2) belonging to this facet (F) is read in the first list, or else when the second end (S2) of a horizontal edge (a3) belonging to this facet (F) is read in the first list;
- comparing the priority of each edge having its first end on the current line with the priority of each facet (F) contained in the fourth list in its state corresponding to the edge in question, that is to say at the moment when this edge is read in the list, then in counting the number of facets (F) present in the fourth list and having a priority greater than that of the edge in question.

7. Method according to Claim 1, characterized in that, in order quickly to order the list of points of intersection between the first and second end, it consists in:

- calculating, for each point of intersection, the value of a parameter (T(I)), which is proportional to the distance between the point of intersection and the second end of the edge, as a function of the coordinates of the two ends of the edges having the intersection, and as a function of their slopes;
- determining the order of the intersections by comparing the value of this parameter (T(I)) for all the points of intersection of the edge;

and in that it consists in calculating the ordinate and the abscissa of each point of intersection from the value of the parameter (T(I)) calculated for this intersection.

FIG.1

FIG.2

$$L\text{-}act(Y(i))=a1,a2,a3,a4$$
$$L\text{-}pas(Y(i+1))=a1,a4,a3,a2$$

**FIG. 3**

**FIG. 4**

FIG.5

**FIG.6**

**FIG.7**

FIG. 8

FIG.9

FIG.10

FIG.11

FIG.12

IND (I) = DA

**FIG.13**

IND (I) = FA

**FIG.14**

IND (I) = FA

**FIG.15**

IND (I) = FA

**FIG.16**

IND (I) = DA - FA

**FIG.17**

| L - Fac (Y1) | = | Ø | Ø | Ø | Ø |
|---|---|---|---|---|---|
| L - Fac (Y2) | = | Ø | F4 | F4 | Ø |
| actif ( F) (Y2) | = | 0 | 1 | 1 | 0 |

FIG. 18

FIG.20

Actif (F) =   0 | 1 | 0
L - Fac (Y(i))= Ø | F | Ø

FIG.19

Actif (F)= 0 | 1 | 1 | 1 | 0
L -Fac(Y(i))=Ø | F | F | F | Ø

Actif (F) =   0 | 2 | 0
L - Fac (Y(i)) = Ø | F | Ø

FIG.21

# FIG.22

```
┌─────────────────────────────────────┐
│        DÉBUT  D'UNE  IMAGE           │
├─────────────────────────────────────┤
│   DÉTERMINATION  DE  L · gen         │
├─────────────────────────────────────┤
│   DÉTERMINATION  DE  Y ( 0 )         │
└─────────────────────────────────────┘
```

```
┌─────────────────────────────────────┐
│      DÉTERMINER  L - act (Y(i))      │
├─────────────────────────────────────┤
│   CALCUL  DU  NOMBRE   N             │
│   D'ARÊTES  MASQUANTES  POUR         │
│   CHAQUE  ARÊTE  COMMENÇANTE         │
├─────────────────────────────────────┤
│   DÉTECTION  DE  L'EXISTENCE  DE     │
│   POINTS D'INTERSECTION SUR LA LIGNE │
│   D'ORDONNÉE  Y ( i )                │
├─────────────────────────────────────┤
│   CALCUL  DES  COORDONNÉES  DES      │
│   POINTS D'INTERSECTION ET DU        │
│   PARAMÈTRE  T                       │
└─────────────────────────────────────┘
```

oui ◁ LISTE L·gen ÉPUISÉE? ▷

non

```
┌─────────────────────────────────────┐
│   DÉTERMINATION  DE  L-act (Y(i))    │
├─────────────────────────────────────┤
│   DÉTERMINATION  DE  Y ( i+1 )       │
├─────────────────────────────────────┤
│   CALCUL DES ABSCISSES DES POINTS DE │
│   PASSAGE SUR LA LIGNE D'ORDONNÉE    │
│   Y(i+1)                             │
├─────────────────────────────────────┤
│   DÉTERMINATION  DE  L-pas (Y(i+1))  │
├─────────────────────────────────────┤
│   DÉTECTION DE L'EXISTENCE DES POINTS│
│   D'INTERSECTION COMPRIS ENTRE Y(i)  │
│   ET Y(i+1)                          │
├─────────────────────────────────────┤
│   CALCUL  DES  COORDONNÉES  DES      │
│   POINTS D'INTERSECTION ET DU        │
│   PARAMÈTRE  T                       │
└─────────────────────────────────────┘
```

```
┌─────────────────────────────────────┐
│   POUR CHAQUE ARÊTE FINISSANT SUR    │
│   LA LIGNE Y(i), DÉTERMINER LA LISTE │
│   ORDONNÉE DES POINTS D'INTERS. QUI  │
│   LUI SONT ATTRIBUÉS                 │
├─────────────────────────────────────┤
│   CALCULER LE NOMBRE DE FACETTES     │
│   MASQUANTES POUR CHAQUE SEGMENT     │
│   DE L'ARÊTE FINISSANTE              │
├─────────────────────────────────────┤
│   AFFICHER LES SEGMENTS NON MASQUÉS  │
└─────────────────────────────────────┘
```

```
┌──────────────────────┐
│   REMPLACEMENT        │
│   DE  Y(i) PAR Y(i+1) │
└──────────────────────┘
```

non ◁ LISTE L·gen EPUISÉE? ▷

oui

```
┌─────────────────────────────────────┐
│        FIN  DE  L'IMAGE              │
└─────────────────────────────────────┘
```